(19) Europäisches Patentamt / European Patent Office / Office européen des brevets

(11) **EP 4 682 514 A1**

(12) **EUROPEAN PATENT APPLICATION**
published in accordance with Art. 153(4) EPC

(43) Date of publication:
**21.01.2026   Bulletin 2026/04**

(21) Application number: **24756923.9**

(22) Date of filing: **14.02.2024**

(51) International Patent Classification (IPC):
**G01N 21/64** (2006.01)

(52) Cooperative Patent Classification (CPC):
**G01N 21/64**

(86) International application number:
**PCT/JP2024/005078**

(87) International publication number:
**WO 2024/172082 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023   JP 2023021253**

(71) Applicants:
• **Live Cell Diagnosis, Ltd.**
  **Asakashi, Saitama 351-0022 (JP)**
• **The University of Tokyo**
  **Bunkyo-ku, Tokyo 113-8654 (JP)**

(72) Inventors:
• **YAMAGISHI Mai**
  **Asakashi, Saitama 351-0022 (JP)**
• **SUZUKI Nobutake**
  **Asakashi, Saitama 351-0022 (JP)**
• **YANG Zhuohao**
  **Tokyo 113-8654 (JP)**
• **SHIRASAKI Yoshitaka**
  **Tokyo 113-8654 (JP)**

(74) Representative: **Aera A/S**
**Niels Hemmingsens Gade 10, 5th Floor**
**1153 Copenhagen K (DK)**

(54) **METHOD FOR ANALYZING CELLS AND CELL-RELATED MATERIALS, AND SYSTEM**

(57)    An object of the present invention is to provide a more efficient, high-throughput system that is able to process more samples in a shorter time and at a lower cost, when observing living cells. The relationship between an objective lens and S/N ratio in the imaging of single-cell secretions was verified through theory and experimentation, and developed a system for observing a wide area without degrading the S/N ratio. Even at a magnification lower than the magnification conventionally considered to be necessary for observing the targets, observation at a sufficient sensitivity and S/N ratio is possible by appropriately setting measurement conditions, and, therefore, it has become possible to significantly increase the number of samples that can be measured in one measurement. Moreover, by irradiating light using a waveguide equipped with a total internal reflection angle adjustment chamber, the S/N ratio was furthered improved.

EP 4 682 514 A1

## Description

### TECHNICAL FIELD

The present invention generally relates to a technique for observing, using a fluorescent label, a target of observation, particularly a cell, a cell content, cell secretions, or a microparticle, and more particularly individual living cells and secretions such as protein produced by individual living cells. The invention more specifically relates to an observation technique using a chip suitable for observing activity of individual single cells.

### BACKGROUND ART

Spatiotemporal imaging of cell secretions can be a powerful tool for understanding intercellular communication. A real-time imaging method for single-cell secretions has been developed, the method combining fluorescent immunoassay with total internal reflection fluorescence microscopy (TIRFM) (non-patent document 1). In addition, a method for detecting single-cell secretions using an optical waveguide chip has also been developed (non-patent document 2). In the system of non-patent document 2, excitation light is directly introduced into the chip.

Furthermore, Patent Document 1 (U.S. Patent No. 11,041,848) discloses a method for observing, in real time, secretions produced by individual living cells using a fluorescent label in a sandwich immunoassay, in which evanescent light is generated only near the bottom of the well, and the evanescent light is used as the excitation wavelength.

### PRIOR ART DOCUMENTS

### PATENT DOCUMENTS

[Patent Document 1] U.S. Patent No. 11,041,848

### NON-PATENT DUCUMENTS

[Non-Patent Document 1] Y. Shirasaki et al., "Real-time single-cell imaging of protein secretion", Sci. Rep., vol. 4, pp. 4736, 2014.
[Non-Patent Document 2] Y. Tanaka et al., "Widefield real-time single-cell secretion imaging with optical waveguide technique," 2017 19th International Conference on Solid-State Sensors, Actuators and Microsystems (TRANSDUCERS), 2017, pp. 1580-1583

### SUMMARY OF THE INVENTION

### PROBLEM TO BE SOLVED BY THE INVENTION

The method disclosed in the prior art documents described above are themselves extremely useful; however, there has been a demand for a more efficient, high-throughput system that is able to process more samples in a shorter time and at a lower cost. Therefore, an object of the present disclosure is to provide a more efficient, high-throughput system that is able to process more samples in a shorter time and at a lower cost.

### MEANS TO SOLVE THE PROBLEM

The present inventors verified the relationship between an objective lens and signal-to-noise (S/N) ratio in the imaging of single cells and secretions thereof through theory and experimentation, and optimized a system for observing a wide area without degrading the S/N ratio, and found that, even at a magnification lower than the magnification conventionally considered to be necessary for observing the targets, observation at a sufficient sensitivity and S/N ratio is possible by appropriately setting measurement conditions, and that it is therefore possible to significantly increase the number of samples that can be measured in one measurement. A method of analyzing a target, such as the activity of individual living cells, according to the present invention and a device used therefor make it possible to analyze more samples in a shorter time and at a lower cost. In addition, the present disclosure also provides a mechanism, referred to as a total internal reflection angle adjustment chamber, for suppressing background signals that are generated by light that has entered at an undesired irradiation angle.

The present disclosure relates to the following aspects:

[Aspect 1]

A method for observing a target in a solution, the method comprising:

a step for using a microscope equipped with an imaging device to acquire an image containing one or more measurement target regions containing the target,
wherein the observation of the target is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 2]

The method according to aspect 1, wherein the target is a cell, a cell content, cell secretions, or a microparticle.

[Aspect 3]

The step according to aspect 2, further comprising a step for preparing a chip having one or more wells that can accommodate cells on a per-cell basis or on a per-cell-unit basis, and a step for accommodating cells in the plurality of wells of the chip on a per-cell basis or a per-cell-unit basis, wherein the one or more wells correspond to the one or more measurement target regions.

[Aspect 4]

The method according to any one of aspects 1 to 3, wherein the waveguide is configured to maintain an irradiation angle of the total internal reflection illumination that irradiates the target.

[Aspect 5]

The method according to any one of aspects 1 to 4, wherein both sides of the waveguide comprise a coating of CYTOP (registered trademark) or a substance having a refractive index of 1.34.

[Aspect 6]

The method according to any one of aspects 1 to 5, wherein the waveguide is configured to reduce periodic brightening and darkening of the total internal reflection illumination that irradiates the target.

[Aspect 7]

The method according to any one of aspects 1 to 6, wherein the waveguide has a thickness of 0.5 mm or less.

[Aspect 8]

The method according to any one of aspects 1 to 7, wherein the magnification of the microscope is set such that the area of a projection of each measurement target region projected on a surface of an imaging element of the imaging device in an acquired image is $1\times$ or more and $90,000\times$ or less of the area of a pixel of the imaging element.

[Aspect 9]

The method according to any one of aspects 1 to 8, wherein the magnification of the microscope is set such that the area of each measurement target region in an acquired image becomes essentially equal to the area of a pixel of an imaging element of the imaging device.

[Aspect 10]

The method according to any one of aspects 1 to 9, wherein the magnification of the microscope is set such that the area of each measurement target region in an acquired image becomes greater than the area of a pixel of an imaging element of the imaging device.

[Aspect 11]

The method according to any one of aspects 1 to 10, wherein the microscope is configured to have a magnification of less than 60×, 50× or less, 20× or less, 4× or less, 2× or less, 1× or less, 0.8× or less, 0.6× or less, 0.5× or less, 0.4× or less, 0.3× or less, or 0.2× or less.

[Aspect 12]

The method according to any one of aspects 3 to 11, wherein the number of wells on a chip is 1,000 or more.

[Aspect 13]

The method according to any one of aspects 3 to 12, wherein a waveguide is included in a chip.

[Aspect 14]

The method according to any one of aspects 3 to 13, wherein a total internal reflection angle adjustment chamber is included in a chip.

[Aspect 15]

The method according to any one of aspects 1 to 14, wherein the magnification of the microscope is set such that each measurement target region in an acquired image corresponds to a pixel of an imaging element of the imaging device at a ratio of substantially 1:1 to 1:40,000.

[Aspect 16]

The method according to any one of aspects 1 to 15, wherein each well can accommodate a cell or a cell unit to be observed, and has a size corresponding to a pixel of an imaging element of the imaging device at a ratio of substantially 1:1 to 1:40,000, at a magnification available in the microscope.

[Aspect 17]

The method according to any one of aspects 1 to 16, wherein the microscope is configured to have a numerical aperture of 1.0 or less.

[Aspect 18]

The method according to any one of aspects 1 to 17, wherein the microscope is configured such that numerical aperture / magnification is 0.03 or greater.

[Aspect 19]

The method according to any one of aspects 1 to 18, wherein the method is for observing the activity of individual living cells.

[Aspect 20]

The method according to any one of aspects 1 to 19, wherein the method is for observing a response of individual living cells to an external stimulus.

[Aspect 21]

A chip, comprising i) at least one sample chamber,

    ii) at least one waveguide, and

iii) at least one total internal reflection angle adjustment chamber.

[Aspect 22]

The chip according to aspect 21, wherein the sample chamber comprises a plurality of wells.

[Aspect 23]

The chip according to aspect 21, wherein the sample chamber comprises a material having a lower refractive index than the refractive index of the total internal reflection angle adjustment chamber.

[Aspect 24]

The chip according to aspect 21, wherein the waveguide is in contact with the sample chamber and/or the total internal reflection angle adjustment chamber.

[Aspect 25]

The chip according to aspect 21, wherein a light-incident surface of the waveguide is mirror-finished or polished.

[Aspect 26]

The chip according to aspect 21, wherein the surface of the waveguide opposite to the sample chamber has a coating.

[Aspect 27]

The chip according to aspect 21, wherein the total internal reflection angle adjustment chamber is provided at a position upstream of the sample chamber as viewed from a light source.

[Aspect 28]

The chip according to aspect 21, wherein the total internal reflection angle adjustment chamber contains a liquid, a gel, or a solid having a refractive index similar to that of a sample to be observed.

[Aspect 29]

The chip according to aspect 21, wherein the total internal reflection angle adjustment chamber contains glycerin, silicon oil, an aqueous solution, or a Cargille refractive index liquid.

[Aspect 30]

The chip according to aspect 29, wherein the waveguide is

i) configured so as to limit the irradiation angle of the total internal reflection illumination that irradiates a labeled substance bound to a capture substance,
ii) configured so as to maintain the irradiation angle of the total internal reflection illumination that irradiates a labeled substance bound to a capture substance, or
iii) configured to reduce periodic brightening and darkening of the total internal reflection illumination that irradiates a labeled substance bound to a capture substance.

[Aspect 31]

The chip according to any one of aspects 21 to 30, wherein a member defining the total internal reflection angle adjustment chamber and/or the sample chamber comprises a member having low light transmittance.

[Aspect 32]

A system for observing a target in a solution, the system comprising:

an imaging device equipped with an objective lens for acquiring an image of a well containing the target,
the chip according to any one of aspects 21 to 31, and
a light source for total internal reflection illumination,
wherein,
the imaging device is configured to acquire an image containing one or more measurement target regions containing the target.

[Aspect 33]

The system according to aspect 32, wherein the chip has a plurality of wells that can accommodate cells on a per-cell basis or on a per-cell-unit basis.

[Aspect 34]

A method for operating a system for observing a target, wherein the system comprises an imaging device equipped with an objective lens for acquiring an image of a well containing a cell or a microparticle, the chip according to any one of aspects 21 to 31, and a light source for total internal reflection illumination, and the imaging device is configured to acquire an image containing one or more measurement target regions containing the target.

[Aspect 35]

A method for analyzing cell activity, wherein the method comprises a step for applying an external stimulus to an observation target, a step for operating a system for observing the target and acquiring an image containing one or more measurement target regions containing the target, and a step for analyzing the image to analyze the cell activity occurring in response to the external stimulus, and
the system comprises an imaging device equipped with an objective lens for acquiring an image of a well containing a cell or a microparticle, the chip according to any one of aspects 21 to 31, and a light source for total internal reflection illumination, and the imaging device is configured to acquire an image containing one or more measurement target regions containing the target.

[Aspect 36]

A method for observing a labeled substance, the method comprising:

i) a step for preparing a solid-phase substrate on a surface of which a capture substance is immobilized,
ii) a step for binding an inactive form of a labeled substance to the capture substance,
iii) a step for applying a first decaying stimulus to the inactive form of the labeled substance to convert the labeled substance to an active form,
iv) a step for applying a second decaying stimulus to the active form of the labeled substance to generate a signal from the label, and
v) a step for observing the generated signal,

wherein
the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 37]

A method for observing a labeled substance, the method comprising:

i) a step for preparing a solid-phase substrate on a surface of which a capture substance is immobilized,
ii) a step for binding an intermediary substance to the capture substance,
iii) a step for binding a labeled substance to the intermediary substance,
iv) a step for applying a first decaying stimulus to the labeled substance to generate a signal from the label,
v) a step for observing the generated signal, and
vi) a step for applying a second decaying stimulus to the intermediary substance to release the bond between the capture substance and the labeled substance,

wherein

the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 38]

A method for observing a labeled substance, the method comprising:

i) a step for preparing a solid-phase substrate on a surface of which a capture substance is immobilized,
ii) a step for binding a labeled substance to the capture substance,
iii) a step for applying a first decaying stimulus to the labeled substance to generate a signal from the label,
iv) a step for observing the generated signal,
v) a step for applying a second decaying stimulus to the labeled substance to generate a de-labeled intermediary substance,
vi) a step for binding the labeled substance to the intermediary substance, and
vii) a step for repeating the steps iii) to vi), wherein

the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 39]

A method for determining a base sequence of a nucleic acid, the method comprising:

i) a step for preparing a solid-phase substrate on a surface of which a template nucleic acid is immobilized,
ii) a step for hybridizing a primer to the template nucleic acid,
iii) a step for adding a mixed solution containing polymerase and labeled nucleic acids having protective modifications corresponding to adenosine triphosphate, cytidine triphosphate, guanosine triphosphate, and thymidine triphosphate,
iv) a step for incorporating one labeled nucleic acid on the basis of complementarity with the template nucleic acid and linking the labeled nucleic acid with a polynucleotide derived from a primer,
v) a step for applying first to fourth attenuating stimuli to the labeled nucleic acid to generate and observe a signal from the label,
vi) a step for applying a fifth and/or a sixth decaying stimulus to the labeled nucleic acid to remove the protective modification and generate a polynucleotide that has a de-labeled intermediary nucleic acid, and
vii) a step for repeating the steps iv) to vi),

wherein
the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 40]

The method according to aspect 39, wherein excitation of fluorescence is carried out by means of total internal reflection illumination, and the total internal reflection illumination is carried out using a waveguide.

[Aspect 41]

A system for observing a target, the system comprising:

an imaging device equipped with an objective lens for acquiring an image of a well containing a cell or a microparticle, and
a light source for total internal reflection illumination,
wherein,
the imaging device is configured to acquire an image containing one or more measurement target regions containing the target, and
the magnification of the objective lens is configured such that the area of each measurement target region in an acquired image becomes $1\times$ or more and $90,000\times$ or less of the area of a pixel of an imaging element of the imaging device.

[Aspect 42]

The system according to aspect 41, further comprising a chip having a plurality of wells that can accommodate cells on a per-cell basis or on a per-cell-unit basis.

[Aspect 43]

A method for operating a system for observing a target, wherein the system comprises an imaging device equipped with an objective lens for acquiring an image of a well containing a cell or a microparticle, and a light source for total internal reflection illumination, and the imaging device is configured to acquire an image containing one or more measurement target regions containing the target, and
the method comprises a step of the imaging device acquiring an image in which the area of each measurement target region in an acquired image becomes $1\times$ or more and $90,000\times$ or less of the area of a pixel of an imaging element of the imaging device.

[Aspect 44]

A method for analyzing cell activity, wherein the method comprises a step for applying an external stimulus to an observation target, a step for operating a system for observing a target and acquiring an image containing one or more measurement target regions containing the target, and a step for analyzing the image to analyze the cell activity occurring in response to the external stimulus, and
the system comprises an imaging device equipped with an objective lens for acquiring an image of a well containing the target, and a light source for total internal reflection illumination, the imaging device is configured to acquire an image containing one or more measurement target regions containing the target, and the magnification of the objective lens is configured such that the area of each measurement target region in an acquired image becomes $1\times$ or more and $90,000\times$ or less of the area of a pixel of an imaging element of the imaging device.

[Aspect 45]

A method for observing a labeled substance, the method comprising:

i) a step for preparing a solid-phase substrate on a surface of which a capture substance is immobilized,
ii) a step for binding an inactive form of a labeled substance to the capture substance,

iii) a step for applying a first decaying stimulus to the inactive form of the labeled substance to convert the labeled substance to an active form,
iv) a step for applying a second decaying stimulus to the active form of the labeled substance to generate a signal from the label, and
v) a step for observing the generated signal,

wherein
the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

[Aspect 46]

A method for observing a labeled substance, the method comprising:

i) a step for preparing a solid-phase substrate on a surface of which a capture substance is immobilized,
ii) a step for binding an intermediary substance to the capture substance,
iii) a step for binding a labeled substance to the intermediary substance,
iv) a step for applying a first decaying stimulus to the labeled substance to generate a signal from the label,
v) a step for observing the generated signal, and
vi) a step for applying a second decaying stimulus to the intermediary substance to release the bond between the capture substance and the labeled substance,

wherein
the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

[Aspect 47]

A method for observing a labeled substance, the method comprising:

i) a step for preparing a solid-phase substrate on a surface of which a capture substance is immobilized,
ii) a step for binding a labeled substance to the capture substance,
iii) a step for applying a first decaying stimulus to the labeled substance to generate a signal from the label,
iv) a step for observing the generated signal,
v) a step for applying a second decaying stimulus to the labeled substance to generate a de-labeled intermediary substance,
vi) a step for binding the labeled substance to the intermediary substance, and
vii) a step for repeating the steps iii) to vi), wherein

the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

[Aspect 48]

A method for determining a base sequence of a nucleic acid, the method comprising:

i) a step for preparing a solid-phase substrate on a surface of which a template nucleic acid is immobilized,
ii) a step for hybridizing a primer to the template nucleic acid,
iii) a step for adding a mixed solution containing polymerase and labeled nucleic acids having protective modifications corresponding to adenosine triphosphate, cytidine triphosphate, guanosine triphosphate, and thymidine triphosphate,

iv) a step for incorporating one labeled nucleic acid on the basis of complementarity with the template nucleic acid and linking the labeled nucleic acid with a polynucleotide derived from a primer,

v) a step for applying first to fourth attenuating stimuli to the labeled nucleic acid to generate and observe a signal from the label,

vi) a step for applying a fifth and/or a sixth decaying stimulus to the labeled nucleic acid to remove the protective modification and generate a polynucleotide that has a de-labeled intermediary nucleic acid, and

vii) a step for repeating the steps iv) to vi),

wherein

the step for observing a signal includes a step for using a microscope equipped with an imaging device to acquire an image containing one or more measurement target regions including a template nucleic acid, the observation is carried out using fluorescence, and the magnification of the microscope is configured such that the area of each measurement target region in an acquired image becomes 1× or more and 90,000× or less of the area of a pixel of an imaging element of the imaging device.

[Aspect 49]

The method according to aspect 48, wherein excitation of fluorescence is carried out by means of total internal reflection illumination, and the total internal reflection illumination is carried out using a waveguide.

[Aspect 50]

A method for observing cell secretions, the method comprising:

i) a step for preparing a solid-phase substrate on a surface of which a capture substance is immobilized,
ii) a step for binding cell secretions to the capture substance,
iii) a step for binding a fluorescently labeled substance to the cell secretion bound to the capture substance,
iv) a step for irradiating the fluorescently labeled substance bound to the cell secretion with evanescent light, and
v) a step for observing the generated fluorescent signal,

wherein

the step for observing the signal comprises a step for using a microscope equipped with an imaging device to acquire an image containing one or more measurement target regions containing the fluorescently labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

[Aspect 51]

The method according to aspect 50, wherein the method does not comprise a washing step after the step for binding a fluorescently labeled substance to the cell secretion bound to the capture substance.

[BRIEF DESCRIPTION OF THE DRAWINGS]

[Figure 1] Figure 1 is an exemplary diagram showing an overview of a system design for real-time imaging of single-cell secretions.
[Figure 2] Figure 2 is a diagram showing an intensity distribution of excitation light in the entire observation region. Excitation light intensity is normalized between 0 and 1.
[Figure 3] Figure 3 shows images of fluorescent beads acquired with an optical waveguide system equipped with three types of objective lenses.
[Figure 4] Figure 4 shows bright-field and dark-field images (left) and TIRF images (right) of IL-5 secretion from stimulated mouse ILC2, acquired with an optical waveguide system equipped with three types of objective lenses.

[Figure 5] Figure 5 shows TIRF images (left) of IL-5 secretion from simulated mouse ILC2, acquired using an optical waveguide chip and three types of objective lenses, and graphs (right) showing temporal changes in the total fluorescence intensity inside each of the wells (circles).

[Figure 6] Figure 6 shows TIRF images of IL-5 secretion from stimulated mouse ILC2, acquired with a 60× or 2× objective lens. The 1108*1108 pixel area of the CMOS camera (Andor) contains four wells (60×) or approximately 3,600 wells (2×).

[Figure 7] Figure 7 is a diagram showing a fluorescent signal photographed using a 20× objective lens with an NA of 0.95, a 20× objective lens with an NA of 0.75, and a 60× objective lens with an NA of 1.49.

[Figure 8] Figure 8 shows a bright-field image of stimulated RAW264.7 cells and TIRF images of IL-6 and TNF-α secretion (left), acquired with an optical waveguide chip and a 4× objective lens (NA = 0.2), and graphs (right) showing temporal changes in the total fluorescence intensity around each cell and derivative values thereof (instantaneous secretion rate).

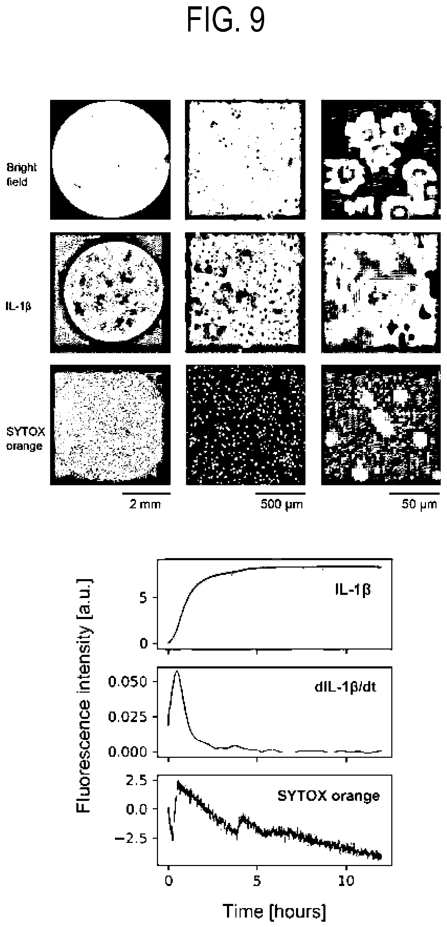

[Figure 9] Figure 9 shows a bright-field image of stimulated mouse alveolar macrophages, a TIRF image of IL-1β secretion, and a fluorescent image of SYTOX Orange Dead Cell Stains, acquired with an optical waveguide chip and a 4× objective lens (NA = 0.2) (above). Magnified images of each region are shown in the columns to the right. Temporal changes in the total fluorescence intensity and derivative values thereof (instantaneous secretion rate) as well as one example of temporal changes in the fluorescence intensity of SYTOX Orange regarding the timings of cell death and IL-1β secretion are shown as graphs (below).

[Figure 10] Figure 10 shows a TIRF image (left) of IL-5 secretion from stimulated mouse ILC2, acquired with an optical waveguide chip and a 4× objective lens (NA = 0.2), and graphs of temporal changes (upper right) in the total fluorescence intensity in each well, and of derivative values for one example thereof (lower right).

[Figure 11A] Figure 11A shows simulated SNR values when measuring different measurement target sizes at four types of objective lens magnifications with a camera having a pixel size of 0.61 μm, the values expressed as relative values with respect to the SNR when using a 60× objective lens for each target size.

[Figure 11B] Figure 11B shows simulated SNR values when measuring different measurement target sizes at four types of objective lens magnifications with a camera having a pixel size of 2.4 μm, the values expressed as relative values with respect to the SNR when using a 60× objective lens for each target size.

[Figure 11C] Figure 11C shows simulated SNR values when measuring different measurement target sizes at four types of objective lens magnifications with a camera having a pixel size of 6.5 μm, the values expressed as relative values with respect to the SNR when using a 60× objective lens for each target size.

[Figure 11D] Figure 11D shows simulated SNR values when measuring different measurement target sizes at four types of objective lens magnifications with a camera having a pixel size of 11 μm, the values expressed as relative values with respect to the SNR when using a 60× objective lens for each target size.

[Figure 12A] Figure 12A shows simulated SNR values when measuring various measurement target sizes with a 4× objective lens, using four types of cameras having different pixel sizes, the values expressed as relative values with respect to the SNR when using a camera with a pixel size of 0.61 μm.

[Figure 12B] Figure 12B shows simulated SNR values when measuring various measurement target sizes with a 10× objective lens, using four types of cameras having different pixel sizes, the values expressed as relative values with respect to the SNR when using a camera with a pixel size of 0.61 μm.

[Figure 12C] Figure 12C shows simulated SNR values when measuring various measurement target sizes with a 20× objective lens, using four types of cameras having different pixel sizes, the values expressed as relative values with respect to the SNR when using a camera with a pixel size of 0.61 μm.

[Figure 12D] Figure 12D shows simulated SNR values when measuring various measurement target sizes with a 60× objective lens, using four types of cameras having different pixel sizes, the values expressed as relative values with respect to the SNR when using a camera with a pixel size of 0.61 μm.

[Figure 13] Figure 13 is a diagram showing an overview of a chip equipped with a refractive index angle adjustment chamber 201, a sample chamber 203, and a waveguide 205. The diagram illustrates a configuration in which a liquid, a solid, or a gel region (refractive index angle adjustment chamber) having a refractive index similar to that of a cell is provided upstream of a substrate (portion in front of a target observation region), so as to have a width greater than or equal to the reflection period.

[Figure 14] Figure 14 is a diagram showing the difference in the signal when a liquid, a solid, or a gel region having a refractive index similar to that of a cell is (right) and is not (left) provided upstream of a substrate (portion in front of a target observation region) so as to have a width greater than or equal to the reflection period.

[Figure 15A] Figure 15A is a diagram showing one embodiment of a method for observing a labeled substance according to the present disclosure. By applying decaying stimulus, it is possible to carry out an observation while controlling the activation of the label.

[Figure 15B] Figure 15B is a diagram showing one embodiment of a method for observing a labeled substance according to the present disclosure. By applying decaying stimulus, it is possible to carry out an observation while controlling the ability to capture the observation target.

[Figure 15C] Figure 15C is a diagram showing one embodiment of a method for observing a labeled substance according to the present disclosure. By applying decaying stimulus, it is possible to carry out an observation while controlling the ability to capture an observation target having a label.

[Figure 16] Figure 16 is a diagram showing results of secretion measurements under multiple conditions (application to drug screening).

[Figure 17] Figure 17 is a diagram showing the results of secretion measurements of human peripheral blood monocytes.

[Figure 18] Figure 18 is a diagram showing the results of long-term culture of cells and simultaneous imaging of three types of secreted materials.

[Figure 19] Figure 19 is a diagram showing the results of co-culturing mouse gastric cancer cells and CTLs and visualizing the secretion of cytotoxic Granzyme B.

## EMBODIMENTS TO CARRY OUT THE INVENTION

(Target Observation Method)

One aspect of the present disclosure relates to a method for observing a target. The target of observation may be, for example, a cell, a cell content, cell secretions, or a microparticle. In some embodiments of the present disclosure, the method for observing a target (for example, a cell, a cell content, cell secretions, or a microparticle) comprises a step for using a microscope equipped with an imaging device to acquire an image containing one or more measurement target regions containing the target (for example, a cell, a cell content, cell secretions, or a microparticle). In some embodiments of the present disclosure, the cell is a living cell; therefore, the method for observing a target according to the present disclosure may be a method for observing the activity of indivisual living cells. Furthermore, in some embodiments of the present disclosure, the cell content may be elements constituting a cell, such as organelles, chromosomes, and nucleic acids (DNA/RNA). The cell content may be isolated from the cell. Furthermore, in some embodiments of the present disclosure, the microparticle may be non-cellular, such as viral particles and exosomes.

In the present Specification, "cell" may be a single cell, or a cell mass, colony, etc., in which two or more cells are adhered.

In the present Specification, the term "observe" may be used interchangeably with terms such as "detect" and "measure" depending on the context. Thus, in addition to a method for observing a target (for example, a cell, a cell content, cell secretions, or a microparticle), the present disclosure also relates to a method for detecting a target, a method for measuring a target, and a method for detecting an indicator relating to a target.

Any cell may be used as the cell, such as a cell isolated from a living body or cultured cells. Examples of cell types include, but are not limited to, immune cells, neural cells, stem cells including iPS cells and ES cells, cancer cells, endocrine cells, and exocrine cells. In addition, the origin of the cell is not limited to animals including humans, and may be plant-derived cells, fungi, or bacteria such as E. coli.

As described above, cell secretions may be cytokines, interleukins, interferons, TNF, and other such proteins, adrenaline and other such neurotransmitters, hormones, etc. Cell secretions may be epigenetically or transiently produced by a particular type of cell. Cell secretions may be secreted in response to a particular stimulus, for example. In some embodiments, the method of the present disclosure may be a method for observing the response of indivisual living cells to an external stimulus.

In some embodiments, the target (for example, a cell, a cell content, cell secretions, or a microparticle) may be present in a culture solution or a buffer solution. The culture solution or buffer solution to be used may be appropriately selected and used in accordance with the cell to be used, the indicator to be measured, and the like. In addition, the target may be present in a well provided in a chip for observation, placed inside an incubator, and observed under adjusted culture conditions, such as temperature and $CO_2$. In general, a well has a depression-like structure or a structure surrounded by a wall surface, but the shape and size thereof may be freely set within a range that allows for observation of cells.

In some embodiments, the target (for example, a cell, a cell content, cell secretions, or a microparticle) is present in a measurement target region, and an image thereof is acquired using an imaging device such as a CMOS camera. The measurement target region may correspond to a well that can accommodate a cell, but no limitation is imposed thereby. An image acquired by the imaging device may include a plurality of measurement target regions. For example, an image acquired by the imaging device may include 1,000 or more measurement target regions; by analyzing such an image, a large number of cells can be simultaneously observed.

In some embodiments, the method of the present disclosure can be carried out on a chip equipped with a sample chamber that holds a sample. The chip used in the method of the present disclosure may be a structure that can be attached to/detached from a microscope stage, for example. The sample chamber may be, for example, configured by a plurality of fine holes or wells. In the present Specification, a chip provided with a plurality of wells may be referred to as an array chip. Thus, the method of the present disclosure may be carried out on an array chip provided with a plurality of wells, each of which being capable of accommodating cells on a per-cell basis or a per-cell-unit basis. No limitation it imposed on such array chips as long as the array chip can accommodate cells or cell units to be measured in each well on a per-cell basis or on a per-cell-unit basis, and a commercially available chip may be used therefor (for example, SIEVEWELL (trademark) manufactured by Tokyo Ohka Kogyo Co., Ltd.). The number of wells on a chip is, for example, 1,000 or more, 2,000 or more, 3,000 or more, 5,000 or more, 10,000 or more, 50,000 or more, 100,000 or more, 300,000 or more, 500,000 or more, etc., and there is no need to set an upper limit. Methods for accommodating one cell in each well on an array chip are known (depending on the conditions, for example, 2 to 10 cells may be accommodated), and can be carried out by preparing a culture solution containing an appropriate number of cells and then injecting the culture solution onto the array chip to carry out centrifugal sedimentation, or the like.

The size of the well is not particularly limited. For example, in the case of a circular well, the diameter may be about 5 to 300 $\mu$m, for example a diameter of 10 $\mu$m, 20 $\mu$m, or 30 $\mu$m, but no limitation is imposed thereby. Furthermore, in some embodiments, each well can accommodate a cell or a cell unit to be observed, and has a size corresponding to pixels of an imaging element of the imaging device at a ratio of substantially 1:1 to 1:40,000 (that is, a size in which the image of each well projected on a surface of an imaging element corresponds to about 1 to 40,000 pixels), at a magnification available in the microscope.

(Use of Fluorescence)

In some embodiments of the present disclosure, the observation of the target (for example, a cell, a cell content, cell secretions, or a microparticle) is carried out using fluorescence. More specifically, for example, an observation may be carried out using a fluorescently labeled antibody or receptor that recognizes the target. In some embodiments of the present disclosure, two types of antibodies are used: a fluorescently labeled detection antibody, and a capture antibody that immobilizes a cell, a cell content, cell secretions, or a microparticle to be observed on a substrate. When observing a substance (such as a protein) that is secreted outside a cell, said protein can be observed, detected, or measured by means of a sandwich immunoassay using an antibody to the protein secreted outside the cell. Here, the excitation of fluorescence may be carried out by means of total internal reflection illumination, and the total internal reflection illumination may be carried out using a waveguide.

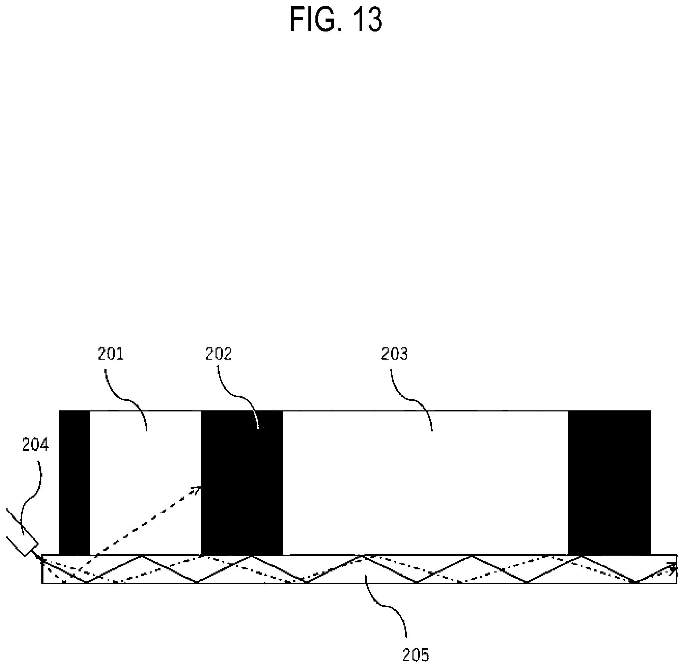

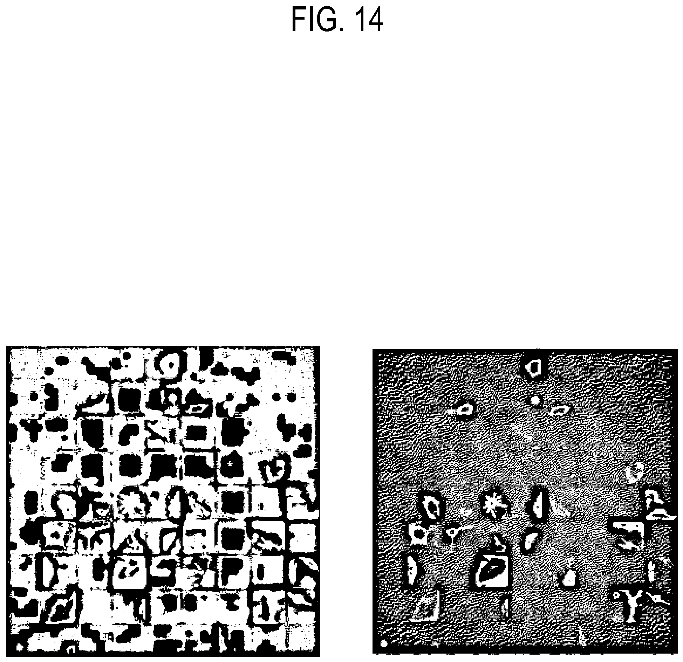

In some embodiments of the present disclosure, the waveguide may be configured so as to limit the irradiation angle of the total internal reflection illumination that irradiates the target. This can be achieved by providing a liquid, a gel, or a solid (for example, glycerin, silicon oil, aqueous solution, Cargille refractive index liquid (Cargille refractive index liquid 607, 608, etc.), refractive index matching gel, PDMS, or the like) having a refractive index that is greater than or equal to that of a solution containing an observation target, upstream of the substrate as viewed from the light source (portion on the light path in front of a target observation region), so as to have a width greater than or equal to the reflection period, for example (refer to Figure 13). Such an element is referred to as a "total internal reflection angle adjustment chamber" in the present Specification. As a result of providing a liquid, a gel, or a solid having a refractive index that is similar to that of a solution containing an observation target upstream of the substrate so as to have a width greater than or equal to the reflection period, it becomes possible to remove light having an undesired irradiation angle (angle shallower than the total internal reflection angle) from the light that irradiates the target, thereby reducing background signals and increasing the S/N ratio (refer to Figure 14). The "reflection period" used in the present Specification refers to the interval between reflections (distance between periodic reflection points on one side of a waveguide) at the maximum incident angle at which total internal reflection occurs. Furthermore, in order to suppress background signals that are generated by light that has entered at an undesired irradiation angle, it was conventionally necessary to form a sample chamber from a substance (for example an amorphous fluoropolymer such as CYTOP (trademark)) having a refractive index nearly equal to that of water, but a total internal reflection angle adjustment chamber also eliminates this necessity.

In some embodiments of the present disclosure, the waveguide may be configured so as to maintain the irradiation angle of the total internal reflection illumination that irradiates the target. The foregoing can be achieved, for example, by coating both sides of the waveguide with CYTOP (registered trademark), or a substance (for example an amorphous fluoropolymer) having a refractive index of approximately 1.34 (for example within 1.34 $\pm$ 0.02). However, when using a waveguide configured so as to limit the irradiation angle according to the present disclosure, the refractive index of the substance used for the coating is not limited to the refractive index mentioned above. As a result, it is possible to guide only light having an angle steeper than the total internal reflection angle and to prevent adhesion, onto the reflection surface, of foreign matter that causes scattering.

Furthermore, in some embodiments of the present disclosure, the waveguide may be configured so as to reduce periodic brightening and darkening of the total internal reflection illumination that irradiates the target. This can be achieved, for example, by configuring the waveguide to have a thickness of 0.5 mm or less. The present inventors found from results of numerical simulations and experimentation that the glass thickness of the waveguide is preferably 0.5 mm or less. A smaller glass thickness is optically preferable, and the observable region is determined dependent on the thickness (the fluctuation range of the irradiation intensity can be defined as a threshold).

Thus, one aspect of the present disclosure is a method for observing a target (for example, a cell, a cell content, cell secretions, or a microparticle), the method comprising a step for using a microscope equipped with an imaging device to acquire an image containing one or more measurement target regions containing the target, wherein the observation of the target is carried out using fluorescence, and the irradiation angle of the total internal reflection illumination that irradiates the target is limited. In addition, one aspect of the present disclosure is a method for observing a target, the method comprising a step for using a microscope equipped with an imaging device to acquire an image containing one or more measurement target regions containing the target, wherein the observation of the target is carried out using fluorescence, and the irradiation angle of the total internal reflection illumination that irradiates the target is maintained. Furthermore, one aspect of the present disclosure is a method for observing a target, the method comprising a step for using a microscope equipped with an imaging device to acquire an image containing one or more measurement target regions containing the target, wherein the observation of the target is carried out using fluorescence, and periodic brightening and darkening of the total internal reflection illumination that irradiates the target is reduced. In addition, another aspect of the present disclosure relates to a system or a device for implementing the above-mentioned method.

One preferred embodiment of the method of the present disclosure is a method for measuring a protein secreted outside a cell by means of a single-cell secretion imaging technique. The single-cell secretion imaging technique can be a sandwich immunoassay method using evanescent light produced by total internal reflection fluorescence illumination. The array chip used for the single-cell secretion imaging technique may be prepared by a method disclosed in literature information, such as Sci Rep. 4:4736, 2014 (non-patent document 3). The array chip is prepared by layering an optical microscope-grade cover glass and resin, and, for example, an array chip in which a well structure is formed of a photosensitive resin that has low cytotoxicity and that can be processed at the μm scale can be used, such as polydimethylsiloxane, Nippon Kayaku Co. SU-8 (registered trademark), or Tokyo Ohka Kogyo Co. TMMR NR-0034 (registered trademark). By using, as an adhesive layer, a resin having a refractive index (1.34) similar to that of water, such as Asahi Glass Co. CYTOP (registered trademark), between the glass and the resin forming the well structure of the array chip, it is possible to uniformly form the evanescent light produced by total internal reflection illumination. The bond between the resin and glass is preferably strong enough not to peel when immersed in acetone, alcohol, various aqueous solutions, or the like, which can be realized by aminosilane surface treatment or surface modification with air plasma. In addition, a microscope equipped with a known total internal reflection fluorescence illumination optics can be used for the total internal reflection fluorescence illumination.

By using such an array chip, it becomes possible to use total internal reflection fluorescence illumination to locally excite fluorescence, with evanescent light, within about 100 nm of the bottom surface of each concave well in the array chip. As a result, it becomes possible to specifically measure an observation target bound to an antibody on the bottom surface of the well, for example, by means of a sandwich immunoassay using a fluorescent detection antibody and an antibody to the observation target bound to the bottom surface of the well. With the single-cell secretion imaging technique, it is possible to observe, detect, or measure any substance that is secreted from a cell that can be detected by means of a sandwich immunoassay.

One aspect of the present disclosure relates to a chip comprising i) at least one sample chamber, ii) at least one waveguide, and iii) at least one total internal reflection angle adjustment chamber. In the present Specification, the term "chip" refers to a sample holding unit that can be mounted, in detachable manner, onto an image acquisition device or a microscope used for observation. In the chip according to the present disclosure, the waveguide is in contact with the total internal reflection angle adjustment chamber and the sample chamber. A chip having the above-mentioned structure can be used in observing a sample using total internal reflection illumination.

The sample chamber provided in the chip according to the present disclosure can hold a sample to be observed. One or a plurality of (for example, two to ten) sample chambers may be provided. In addition, as described above, the sample chamber may be, for example, configured by a plurality of fine holes or wells. In the present Specification, a chip provided with a plurality of wells may be referred to as an array chip. Thus, the chip of the present disclosure may be an array chip provided with a plurality of wells, each of which being capable of accommodating cells on a per-cell basis or a per-cell-unit basis. The sample chamber or the well may be made of a material (such as CYTOP, FEP, COP, silicone, or the like) having a lower refractive index than the refractive index of the total internal reflection angle adjustment chamber.

An appropriate light source for total internal reflection illumination is connected to the waveguide portion provided in the chip according to the present disclosure. For example, an LDI-7 laser diode illuminator (89 North) can be used as the light source. In some embodiments, the waveguide is in contact with the sample chamber, and total internal reflection illumination to the sample chamber is carried out by light introduced into the waveguide. Typically, a waveguide is in contact with the lower surface of the sample chamber, but no limitation is imposed thereby. Examples of a waveguide substrate that can be used include glass, plastic, sapphire, and the like. In some embodiments, the incident surface of the waveguide may be mirror-finished or polished. In addition, of the upper and lower surfaces of the waveguide in the height direction, the surface opposite to the sample chamber (generally the lower surface) may have a coating (for example, CYTOP, FEP, COP, silicone coating, etc.), and the coating is preferably transparent, has low fluorescence, and has high transmittance.

The size of the waveguide can be freely determined in accordance with the amount of the sample to be measured, the performance of the light source, and the like. For example, the depth in the direction coinciding with the light propagation direction and the width in the direction perpendicular thereto may be, independently, in the range of 5 to 150 mm, and the thickness (height) may be in the range of 1 to 0.1 mm, such as 0.5 mm or less, for example.

The total internal reflection angle adjustment chamber (refer to Figure 13) provided in the chip according to the present disclosure plays the role of limiting the irradiation angle of the total internal reflection illumination that irradiates the sample to be observed. The chamber is, for example, provided upstream of the sample chamber as viewed from the light source (portion on the light path in front of the target observation region) and contains a liquid, a gel, or a solid (for example, glycerin, silicon oil, aqueous solution, Cargille refractive index liquid (Cargille refractive index liquid 607, 608, etc.), refractive index matching gel, PDMS, or the like) having a refractive index similar to that of a solution containing the observation target. The substance contained in the total internal reflection angle adjustment chamber can be replaced as necessary. Typically the total internal reflection angle adjustment chamber is provided on the same side as the sample chamber, usually on the upper surface of the waveguide, but no limitation is imposed thereby. One or a plurality of (for example two to three) total internal reflection angle adjustment chambers may be provided. The total internal reflection angle adjustment chamber typically has a rectangular parallelepiped shape. Typically, the width of the total internal reflection angle adjustment chamber is about the same as or greater than that of the waveguide. The depth of the total internal reflection angle adjustment chamber is set (refer to Figure 13) to a length of greater than or equal to the reflection period of the incident light and is determined in accordance with the thickness of the waveguide substrate, such as in the range of 3 to 20 mm. The height (depth) of the total internal reflection angle adjustment chamber can be, for example, in the range of 3 to 20 mm. Preferably, a member having low light transmittance (for example, a black member, a member containing carbon black, or a member containing a light absorber) is used as the member defining the total internal reflection angle adjustment chamber and the sample chamber.

The chip according to the present disclosure may have any shape and size, but typically has a rectangular parallelepiped shape. In some embodiments, the bottom surface of the chip has a depth in a direction coinciding with the light propagation direction in the waveguide, and a width in the direction perpendicular thereto. The depth and the width of the chip can each be, independently, in the range of 5 to 150 mm, for example, but no limitation is imposed thereby. In some embodiments, the height of the chip may be dependent on the depth of the total internal reflection angle adjustment chamber, but can be in the range of 3.5 to 30 mm.

(Imaging Device and Microscope)

In some embodiments, in the method of the present disclosure, an imaging device acquires an image containing one or more measurement target regions containing a target (for example, a cell, a cell content, cell secretions, or a microparticle). More specifically, in some embodiments, in the method of the present disclosure, a microscope equipped with an imaging device is used to acquire an image containing one or more measurement target regions containing the target. The imaging device may be, for example, a CMOS camera or a CCD camera, but no limitation is imposed thereby. The microscope equipped with an imaging device may be, for example, a fluorescence microscope, but no limitation is imposed thereby; in the present Specification, it is to be understood that microscopes include common imaging optical systems. In addition, when using the single-cell secretion imaging technique, images can be acquired over time using a microscope equipped with total internal reflection fluorescence illumination optics.

When using an array chip on which hundreds or thousands of cells can be placed, there are cases in which it is not possible to photograph all the cells on the array chip at once. Conventionally, in order to observe a target (for example, a cell, a cell content, cell secretions, or a microparticle) more accurately and in more detail, it was thought that imaging at high magnification and high resolution was necessary, limiting the range that can be imaged at once. In such a case, for example, one array chip can be divided into a plurality of sections, and each section can be imaged sequentially. Therefore, a certain time interval occurs between the first imaging and the second imaging of a particular cell, and the cell may be continuously imaged at regular intervals.

In some embodiments of the present disclosure, the magnification of the microscope can be set such that the area of each measurement target region in the acquired image is $160,000\times$ or less than the area of a pixel of an imaging element of the imaging device (that is, less than or equal to $400\times400$ pixels), such as $90,000\times$ or less (that is, less than or equal to $300\times300$ pixels), $80,000\times$ or less, $70,000\times$ or less, $60,000\times$ or less, $50,000\times$ or less, $30,000\times$ or less, $10,000\times$ or less, $5,000\times$ or less, $1,000\times$ or less, $500\times$ or less, $100\times$ or less, $50\times$ or less, $10\times$ or less, $5\times$ or less, $3\times$ or less, $2\times$ or less, or $1.5\times$ or less. In some embodiments, the magnification of the microscope is set such that the area ratio described above is approximately $1\times$ (for example, $1.1\times$, $1.0\times$, or $0.9\times$). In some cases, the magnification may be less than or equal to $1\times$, such as $0.8\times$, $0.5\times$, $0.2\times$, or $0.1\times$. In the present Specification, the word "approximately" is intended to include a range of approximately plus or minus 10% of the specific numerical value that follows the word.

In some embodiments, the magnification of the microscope is set such that the area of each measurement target region in the acquired image becomes greater than the area of a pixel of an imaging element of the imaging device.

Therefore, the magnification of the microscope may be set such that the area of each measurement target region in the acquired image becomes greater than or equal to 1.1×, greater than or equal to 1.2×, greater than or equal to 1.5×, greater than or equal to 2×, or greater than or equal to 10× the area of a pixel of an imaging element of the imaging device.

In some embodiments, the magnification of the microscope is set such that the area of each measurement target region in the acquired image becomes substantially equal to the area of a pixel of an imaging element of the imaging device. In this case, it becomes possible to use an imaging device with one million pixels (megapixel) to observe a measurement target region containing one million cells. In addition, in some embodiments, the magnification of the microscope is set such that each measurement target region in the acquired image corresponds to a pixel of an imaging element of the imaging device at a ratio of substantially 1:1 to 1: 40,000 (that is, each measurement target region : number of pixels of the imaging element = 1 : 40,000), for example, at a ratio of approximately 1:1, at a ratio of approximately 1:2, at a ratio of approximately 1:5, at a ratio of approximately 1:10, at a ratio of approximately 1:20, at a ratio of approximately 1:25, at a ratio of approximately 1:50, at a ratio of approximately 1:75, at a ratio of approximately 1:100, at a ratio of approximately 1:500, at a ratio of approximately 1:1,000, at a ratio of approximately 1:2,000, at a ratio of approximately 1:5,000, at a ratio of approximately 1:10,000, at a ratio of approximately 1:20,000, at a ratio of approximately 1:30,000, or at a ratio of approximately 1:40,000.

In some embodiments, the microscope is configured to have a magnification of, for example, less than 60×, 50× or less, 20× or less, 15× or less, 10× or less, 8× or less, 5× or less, 4× or less, 3× or less, 2× or less, approximately 2×, or approximately 1×. In some embodiments, the microscope is configured to have a magnification of 20×, 10×, 4×, or 2×. Examples of an objective lens that can be used include, but are not limited to, Nikon's CFI Plan Achromat Series, CFI Plan Apochromat Series, Lambda Series, or CFI Plan Fluoro Series. In some cases, a magnification of 1× may be employed without using an objective lens. In the present Specification, the microscope equipped with an imaging device is understood to include a standalone imaging device that does not change the magnification. Alternatively, a telecentric optical system of 0.2× or 0.5× magnification may be used.

In some embodiments, the microscope is configured to have a numerical aperture of 1.0 or less, for example, but not limited to, 0.7 or less, 0.5 or less, 0.3 or less, 0.2 or less, or 0.1 or less. In some embodiments, the microscope is configured to have a numerical aperture of 0.7, 0.45, 0.2, or 0.1. Examples of an objective lens that can be used include, but are not limited to, Nikon's CFI Plan Achromat Series, CFI Plan Apochromat Series, Lambda Series, or CFI Plan Fluoro Series.

In some embodiments, the microscope is configured such that numerical aperture / magnification becomes 0.03 or greater, 0.035 or greater, 0.04 or greater, 0.045 or greater, or 0.05 or greater. Examples of an objective lens that can be used include, but are not limited to, Nikon's CFI Plan Achromat Series, CFI Plan Apochromat Series, Lambda Series, or CFI Plan Fluoro Series. The relationship between numerical aperture, magnification, and relative S/N ratio can be summarized as follows.

[Table 1]

| Magnification (M) | 1X | 2X | 4X | 10X | 20X | 60X |
|---|---|---|---|---|---|---|
| Numerical Aperture (NA) | 0.04 | 0.1 | 0.2 | 0.45 | 0.7 | 1.49 |
| Relative S/N ratio | 0.04 | 0.05 | 0.05 | 0.045 | 0.035 | 0.025 |

(Observation Over Time)

The method of the present disclosure also can be suitably used for the observation of a cell having cellular information that changes over time. In the present Specification, "cellular information" is information indicating the function, properties, and state of a cell, examples including, but not limited to: DNA sequence information of genes (genome), epigenetic information that controls gene expression (DNA methylation, histone methylation, acetylation, phosphorylation), primary gene transcript (mRNA, non-coding RNA, microRNA, etc.) information (transcriptome), protein translation amount and modification information such as phosphorylation, oxidation, glycation (proteome), metabolite information (metabolome), intracellular hydrogen ion concentration index (pH), intracellular ATP concentration, ion concentrations (calcium, magnesium, potassium, sodium, etc.), and intracellular temperature.

Cellular information that changes over time means cellular information that changes with the lapse of time. In a preferred embodiment of the present invention, the foregoing means cellular information that changes on a time scale of seconds or minutes. Examples of cellular information that changes on a time scale of seconds or minutes include primary gene transcripts (such as mRNA) information (transcriptome), protein translation amount and modification information such as phosphorylation, oxidation, glycation (proteome), and metabolite information (metabolome).

By using the method of the present disclosure, it is possible to observe a cell while distinguishing between different pieces of cellular information that changes per unit of time, and to observe a cell without sacrificing temporal resolution with respect to the cellular information that changes over time.

(System)

One aspect of the present disclosure relates to a system or a device for implementing the method according to the present disclosure. In some embodiments, a system or a device according to the present disclosure is a system or a device for observing a target, wherein the system or device comprises an imaging device equipped with an objective lens for acquiring an image of a well containing a cell or a microparticle, a chip according to the present disclosure, and a light source for total internal reflection illumination, and the imaging device is configured to acquire an image containing one or more measurement target regions containing the target. Here, the system or device may have a combination of any of the elements disclosed in the present Specification. In some embodiments, the system or device according to the present disclosure is a system or a device for observing a target, wherein the system or device comprises an imaging device equipped with an objective lens for acquiring an image of a well containing a cell or a microparticle, and a light source for total internal reflection illumination, the imaging device is configured to acquire an image containing one or more measurement target regions containing the target, and the magnification of the objective lens is configured such that the area of each measurement target region in the acquired image becomes $1\times$ or more and $90,000\times$ or less of the area of a pixel of an imaging element of the imaging device. Here, the system or device may have a combination of any of the elements disclosed in the present Specification.

(Method of Operation)

One aspect of the present disclosure relates to a method of operation for a system or device for observing a target (for example, a cell, a cell content, cell secretions, or a microparticle). In some embodiments, the method of operation according to the present disclosure relates to a method of operation for a system or a device for observing a target, wherein the system or device comprises an imaging device equipped with an objective lens for acquiring an image of a well containing a cell or a microparticle, the chip according to the present disclosure, and a light source for total internal reflection illumination, and the imaging device is configured to acquire an image containing one or more measurement target regions containing the target. In some embodiments, the method of operation according to the present disclosure is a method of operation for a system or device for observing a target, wherein the system or device comprises an imaging device equipped with an objective lens for acquiring an image of a well containing a cell or a microparticle, and a light source for total internal reflection illumination, the imaging device is configured to acquire an image containing one or more measurement target regions containing the target, and the method comprises a step of the imaging device acquiring an image in which the area of each measurement target region in the acquired image becomes $1\times$ or more and $90,000\times$ or less of the area of a pixel of an imaging element of the imaging device. Here, the system or device may have a combination of any of the elements disclosed in the present Specification.

(Analysis Method)

One aspect of the present disclosure relates to a method of analyzing cell activity. In some embodiments, the analysis method according to the present disclosure may comprise a step for applying an external stimulus to indivisual living cells to be observed, a step for operating a system or device for observing the target and acquiring an image containing one or more measurement target regions containing the target, and a step for analyzing the image to analyze the cell activity occurring in response to the external stimulus. Here, the system or device may be a system or device comprising an imaging device equipped with an objective lens for acquiring an image of a well containing a target, the chip according to the present disclosure, and a light source for total internal reflection illumination, and the imaging device may be configured to acquire an image containing one or more measurement target regions containing the target. In addition, in some embodiments, the analysis method according to the present disclosure may comprise a step for applying an external stimulus to an observation target, a step for operating a system or device for observing the target and acquiring an image containing one or more measurement target regions containing the target, and a step for analyzing the image to analyze the cell activity occurring in response to the external stimulus. Here, the system or device may be a system or device comprising an imaging device equipped with an objective lens for acquiring an image of a well containing the target, and a light source for total internal reflection illumination, wherein the imaging device is configured to acquire an image containing one or more measurement target regions containing the target, and the magnification of the objective lens is configured such that the area of each measurement target region in the acquired image becomes $1\times$ or more and $90,000\times$ or less of the area of a pixel of an imaging element of the imaging device. Here, the system or device may have a combination of any of the elements disclosed in the present Specification.

(Control and Observation of Substances Near Solid-phase Surfaces Using Total Internal Reflection Illumination)

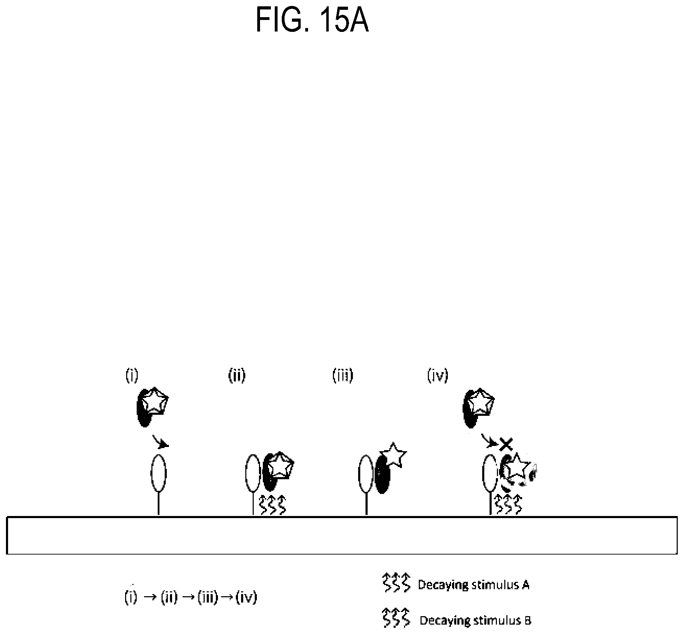

One aspect of the present disclosure also relates to control of substances near solid-phase surfaces using evanescent light (decaying stimulus) produced by total internal reflection illumination. For example, in some embodiments, as shown in Figure 15A, a capture substance immobilized on a solid-phase surface can be, in a solution, brought into contact with an inactive form of a labeled substance that directly or indirectly binds to the capture substance. The capture substance and the labeled substance do not need to be directly bound and may be indirectly bound by the labeled substance being bound to another intermediary substance that is bound to the capture substance (this intermediary substance can be an actual target of measurement). An decaying stimulus A (first decaying stimulus) produced by evanescent light is applied to an inactive form of a labeled substance that is bound to the capture substance and immobilized near a solid-phase surface, and the labeled substance can thereby be converted from an inactive form to an active form (for example, a fluorescent photochromic molecule can be used as a substance having such a property). At this time, the decaying stimulus A (first decaying stimulus) does not reach free labeled substances in the solution not present on the solid-phase surface. An decaying stimulus B (second decaying stimulus) is applied to the labeled substance converted into the active form, thereby exciting and activating the label, such as fluorescence, to generate a signal. Even at this time, the decaying stimulus B (second decaying stimulus) does not reach free labeled substances in the solution not present on the solid-phase surface, and a signal is not generated from the label. In addition, even if a free labeled substance happens to be present near the solid-phase surface, unless the labeled substance has been converted to an active form, excitation / activation of the label does not occur, and a signal is not generated. By carrying out control in a such a stepwise manner, effects such as improvement in the S/N ratio can be obtained. In addition, in some embodiments, the present method can be combined with observation at a low magnification according to the present disclosure (the magnification of the microscope is set such that the area of each measurement target region in the acquired image becomes $1\times$ or more and $90,000\times$ or less of the area of a pixel of an imaging element of the imaging device). As a result, effects such as further improvement in the S/N ratio can be obtained. In addition, in some embodiments, the present method can be combined with a method according to the present disclosure in which the waveguide is configured so as to limit the irradiation angle of the total internal reflection illumination that irradiates a labeled substance bound to a capture substance, a method according to the present disclosure in which the waveguide is configured so as to maintain the irradiation angle of the total internal reflection illumination that irradiates a labeled substance bound to a capture substance, and a method according to the present disclosure in which the waveguide is configured so as to reduce periodic brightening and darkening of the total internal reflection illumination that irradiates a labeled substance bound to a capture substance. As a result, effects such as further improvement in the S/N ratio can be obtained.

Accordingly, some embodiments according to the present disclosure is a method for observing a substance, the method comprising a step for preparing a solid-phase substrate on a surface of which a capture substance is immobilized, a step for binding an inactive form of a labeled substance to the capture substance, a step for applying a first decaying stimulus to the inactive form of the labeled substance to convert the labeled substance to an active form, a step for applying a second decaying stimulus to the active form of the labeled substance to generate a signal from the label, and a step for observing the generated signal, wherein: the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of 1.34. Furthermore, the waveguide may be configured to reduce periodic brightening and darkening of the total internal reflection illumination that irradiates a labeled substance bound to a capture substance.

Accordingly, some embodiments of the present disclosure relates to a method for observing a substance, the method comprising a step for preparing a solid-phase substrate on a surface of which a capture substance is immobilized, a step for binding an inactive form of a labeled substance to the capture substance, a step for applying a first decaying stimulus to the inactive form of the labeled substance to convert the labeled substance to an active form, a step for applying a second decaying stimulus to the active form of the labeled substance to generate a signal from the label, and a step for observing the generated signal. The step for observing a signal further includes a step for using a microscope equipped with an imaging device to acquire an image containing one or more measurement target regions containing a labeled substance bound to a capture substance, and can include a step in which the observation of the labeled substance is carried out using fluorescence, and the magnification of the microscope is set such that the area of each measurement target region in the acquired image becomes $1\times$ or more and $90,000\times$ or less of the area of a pixel of an imaging element of the imaging device. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

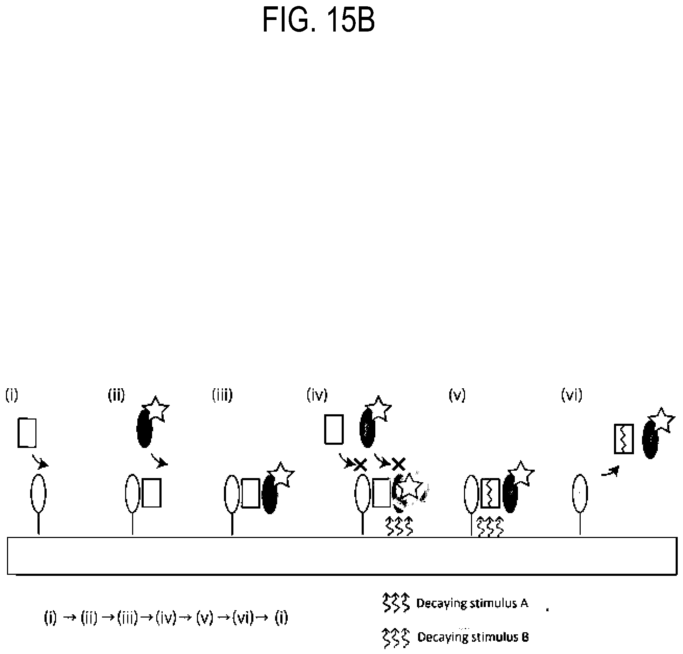

As described above and also shown in Figure 15B, the labeled substance may be indirectly bound to the capture substance via another intermediary substance that is bound to the capture substance. For example, as shown in Figure 15B, an decaying stimulus A (first decaying stimulus) can be applied to a labeled substance bound to an intermediary substance bound to the capture substance to generate a signal from the label. Furthermore, an decaying stimulus B (second decaying stimulus) may be applied to convert the structure of the intermediary substance, destroy the intermediary substance, etc., to release the bond between the capture substance and the labeled substance. By carrying out such a control, it is possible to recycle and reuse the capture substance and the labeled substance. Similarly, in some embodiments, the present method can be combined with observation at a low magnification according to the present disclosure (the magnification of the microscope is set such that the area of each measurement target region in the acquired image becomes $1\times$ or more and $90,000\times$ or less of the area of a pixel of an imaging element of the imaging device). As a result, effects such as further improvement in the S/N ratio can be obtained. In addition, in some embodiments, the present method can be combined with a method according to the present disclosure in which the waveguide is configured so as to limit the irradiation angle of the total internal reflection illumination that irradiates a labeled substance bound to a capture substance, a method according to the present disclosure in which the waveguide is configured so as to maintain the irradiation angle of the total internal reflection illumination that irradiates a labeled substance bound to a capture substance, and a method according to the present disclosure in which the waveguide is configured so as to reduce periodic brightening and darkening of the total internal reflection illumination that irradiates a labeled substance bound to a capture substance. As a result, effects such as further improvement in the S/N ratio can be obtained.

Accordingly, some embodiments according to the present disclosure is a method for observing a substance, the method comprising a step for preparing a solid-phase substrate on a surface of which a capture substance is immobilized, a step for binding an intermediary substance to the capture substance, a step for binding a labeled substance to the intermediary substance, a step for applying a first decaying stimulus to the labeled substance to generate a signal from the label, a step for observing the generated signal, and a step for applying a second decaying stimulus to the intermediary substance to release the bond between the capture substance and the labeled substance, wherein: the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

Accordingly, some embodiments of the present disclosure relates to a method for observing a substance, the method comprising a step for preparing a solid-phase substrate on a surface of which a capture substance is immobilized, a step for binding an intermediary substance to the capture substance, a step for binding a labeled substance to the intermediary substance, a step for applying a first decaying stimulus to the labeled substance to generate a signal from the label, a step for observing the generated step, and a step for applying a second decaying stimulus to the intermediary substance to release the bond between the capture substance and the labeled substance. The step for observing a signal further includes a step for using a microscope equipped with an imaging device to acquire an image containing one or more measurement target regions containing a labeled substance bound to a capture substance, and can include a step in which the observation of the labeled substance is carried out using fluorescence, and the magnification of the microscope is set such that the area of each measurement target region in the acquired image becomes $1\times$ or more and $90,000\times$ or less of the area of a pixel of an imaging element of the imaging device. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

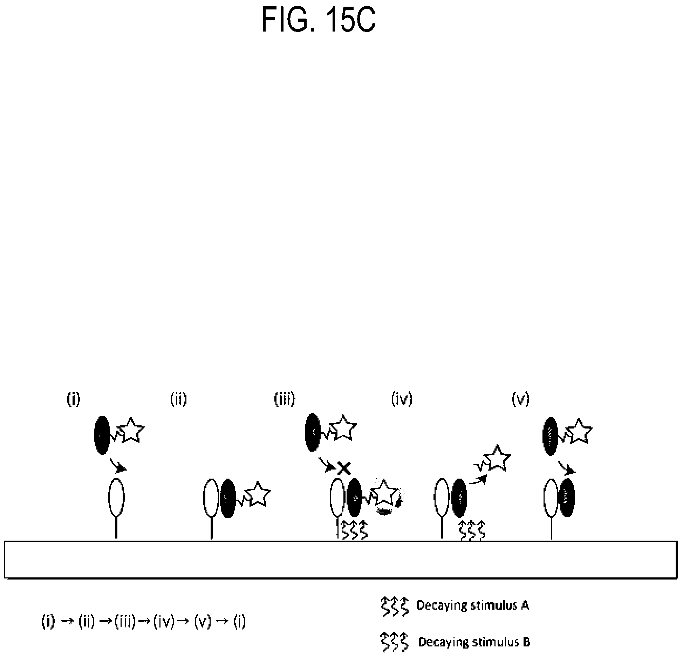

In addition, as shown in Figure 15C, an decaying stimulus B (second decaying stimulus) may be used to de-label the labeled substance. De-labeling may include, for example, detachment, decomposition, structural changes, etc., of the label portion. The labeled substance may be de-labeled and subsequently be converted to an intermediary substance that binds (or links) a different labeled substance. By carrying out such control, it is possible to continuously observe a labeled substance while forming a structure in which the intermediary substance (labeled substance that has been de-labeled) is continuously linked. Similarly, in some embodiments, the present method can be combined with observation at a low magnification according to the present disclosure (the magnification of the microscope is set such that the area of each measurement target region in the acquired image becomes $1\times$ or more and $90,000\times$ or less of the area of a pixel of an imaging element of the imaging device). As a result, effects such as further improvement in the S/N ratio can be obtained. In addition, in some embodiments, the present method can be combined with a method according to the present disclosure in which the waveguide is configured so as to limit the irradiation angle of the total internal reflection illumination that irradiates a labeled substance bound to a capture substance, a method according to the present disclosure in which the waveguide is configured so as to maintain the irradiation angle of the total internal reflection illumination that irradiates a labeled substance bound to a capture substance, and a method according to the present disclosure in which the waveguide is configured so as to reduce periodic brightening and darkening of the total internal reflection illumination that irradiates a labeled substance secretion bound to a capture substance. As a result, effects such as further improvement in the S/N ratio can be obtained.

Accordingly, some embodiments according to the present disclosure is a method for observing a substance, the method comprising i) a step for preparing a solid-phase substrate on a surface of which a capture substance is immobilized, ii) a step for binding a labeled substance to the capture substance, iii) a step for applying a first decaying stimulus to the labeled substance to generate a signal from the label, iv) a step for observing the generated signal, v) a step for applying a second decaying stimulus to the labeled substance to produce a de-labeled intermediary substance, vi) a step for binding the labeled substance to the intermediary substance, and a step for repeating steps iii) to vi) above, wherein: the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

Accordingly, some embodiments of the present disclosure relates to a method for observing a substance, the method comprising i) a step for preparing a solid-phase substrate on a surface of which a capture substance is immobilized, ii) a step for binding a labeled substance to the capture substance, iii) a step for applying a first decaying stimulus to the labeled substance to generate a signal from the label, iv) a step for observing the generated signal, v) a step for applying a second decaying stimulus to the labeled substance to produce a de-labeled intermediary substance, vi) a step for binding the labeled substance to the intermediary substance, and a step for repeating steps iii) to vi) above. The step for observing a signal further includes a step for using a microscope equipped with an imaging device to acquire an image containing one or more measurement target regions containing a labeled substance, and can include a step in which the observation of the labeled substance is carried out using fluorescence, and the magnification of the microscope is set such that the area of each measurement target region in the acquired image becomes $1\times$ or more and $90,000\times$ or less of the area of a pixel of an imaging element of the imaging device. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

In some embodiments, the method described above can be applied to sequencing of base sequences of nucleic acids, such as DNA and RNA.

For example, when determining the base sequence of a nucleic acid, a template nucleic acid for determining the base sequence is used as the capture substance. When immobilizing the template nucleic acid on the surface of a solid-phase substrate, the nucleic acid can be amplified to form a colony, similar to other next-generation sequencing (NGS) methods. A primer for initiating an extension reaction is bound to the template nucleic acid to determine the base sequence. Modified nucleoside triphosphate (hereinafter also referred to as labeled nucleic acid or modified nucleic acid) that corresponds to the four bases ACGT of DNA can be used as the labeled substance, and can be modified such that each of ACGT emits four different types of fluorescent signals, for example. The modified nucleic acid that is incorporated on the basis of complementarity with the template nucleic acid is linked with the primer-derived polynucleotide by the polymerase contained in the reaction solution. By applying an decaying stimulus (for example, evanescent light with four types of wavelengths) to the linked modified nucleic acid, a signal is generated from the label; by observing this signal, the type of the newly-incorporated base can be identified. In addition, the modified nucleic acid may have a protective modification for preventing undesired extension reactions introduced such that the extension reaction proceeds one base at a time (regarding the modification, for example, refer to Genomics Proteomics Bioinformatics. 2013 Feb; 11(1): 34-40). After detecting the signal from the label, a different decaying stimulus can be applied to the modified nucleic acid to remove the protective modification. In addition, the de-labeling of the modified nucleic acid (for example, detachment of the labeled portion) can be carried out simultaneously at this time, or a different decaying stimulus may be applied to the modified nucleic acid to separately carry out de-labeling. After the protective modification for preventing the extension reaction is removed, the linked modified nucleic acid can be considered to be an intermediary substance (hereinafter also referred to as intermediary nucleic acid). In the subsequent cycle, a new modified nucleic acid, on the basis of complementarity with the template, is incorporated and linked with a primer derived polynucleotide by the polymerase. Thereafter, the above-mentioned steps are repeated to determine the base sequence of the template nucleic acid. One benefit of this method is that steps for replacing the reaction solution and washing the solid-phase substrate are mostly or completely unnecessary. As a result, it becomes possible to save time and reduce costs.

In some embodiments, the present method can be combined with observation at a low magnification according to the present disclosure (the magnification of the microscope is set such that the area of each measurement target region in the acquired image becomes $1\times$ or more and $90,000\times$ or less of the area of a pixel of an imaging element of the imaging device). As a result, effects such as further improvement in the S/N ratio can be obtained. In addition, in some embodiments, the present method can be combined with a method according to the present disclosure in which the waveguide is configured so as to limit the irradiation angle of the total internal reflection illumination that irradiates a labeled substance bound to a capture substance, a method according to the present disclosure in which the waveguide is configured so as to maintain the irradiation angle of the total internal reflection illumination that irradiates a labeled substance bound to a capture substance, and a method according to the present disclosure in which the waveguide is configured so as to reduce periodic brightening and darkening of the total internal reflection illumination that irradiates a labeled substance bound to a capture substance. As a result, effects such as further improvement in the S/N ratio can be obtained.

Accordingly, some embodiments according to the present disclosure is a method for determining the base sequence of a nucleic acid, the method comprising i) a step for preparing a solid-phase substrate on the surface of which a template nucleic acid is immobilized, ii) a step for hybridizing a primer to the template nucleic acid, iii) a step for adding a mixed solution containing polymerase and labeled nucleic acids having protective modifications corresponding to adenosine triphosphate, cytidine triphosphate, guanosine triphosphate, and thymidine triphosphate, iv) a step for incorporating one labeled nucleic acid on the basis of complementarity with the template nucleic acid and linking the labeled nucleic acid with a polynucleotide derived from a primer, v) a step for applying first to fourth attenuating stimuli to the labeled nucleic acid to generate and observe a signal from the label, vi) a step for applying a fifth and/or a sixth decaying stimulus to the labeled nucleic acid to remove the protective modification and generate a polynucleotide that has a de-labeled intermediary nucleic acid, and vii) a step for repeating the steps iv) to vi), wherein: the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

Accordingly, some embodiments according to the present disclosure relates to a method for determining the base sequence of a nucleic acid, the method comprising i) a step for preparing a solid-phase substrate on the surface of which a template nucleic acid is immobilized, ii) a step for hybridizing a primer to the template nucleic acid, iii) a step for adding a mixed solution containing polymerase and labeled nucleic acids having protective modifications corresponding to adenosine triphosphate, cytidine triphosphate, guanosine triphosphate, and thymidine triphosphate, iv) a step for incorporating one labeled nucleic acid on the basis of complementarity with the template nucleic acid and linking the labeled nucleic acid with a polynucleotide derived from a primer, v) a step for applying first to fourth attenuating stimuli to the labeled nucleic acid to generate and observe a signal from the label, vi) a step for applying a fifth and/or a sixth decaying stimulus to the labeled nucleic acid to remove the protective modification and generate a polynucleotide that has a de-labeled intermediary nucleic acid, and vii) a step for repeating the steps iv) to vi). The step for observing a signal further includes a step for using a microscope equipped with an imaging device to acquire an image containing one or more measurement target regions containing a labeled substance, and can include a step in which the observation of the labeled substance is carried out using fluorescence, and the magnification of the microscope is set such that the area of each measurement target region in the acquired image becomes $1\times$ or more and $90,000\times$ or less of the area of a pixel of an imaging element of the imaging device. In addition, the excitation of fluorescence may be carried out by means of total internal reflection illumination, and the total internal reflection illumination may be carried out using a waveguide. Furthermore, the waveguide may be configured so as to limit the irradiation angle of the total internal reflection illumination that irradiates a labeled substance bound to a capture substance, and a liquid, a solid, or a gel having a refractive index similar to that of the observation target may be provided in an upstream portion of the waveguide so as to have a width greater than or equal to the reflection period. Furthermore, the waveguide may be configured so as to maintain the irradiation angle of the total internal reflection illumination that irradiates a labeled substance bound to a capture substance, and both sides of the waveguide may comprise a coating of CYTOP (registered trademark) or a substance having a refractive index of approximately 1.34. Furthermore, the waveguide may be configured to reduce periodic brightening and darkening of the total internal reflection illumination that irradiates a labeled substance bound to a capture substance.

(Washless ELISpot)

One aspect of the present disclosure relates to a method for executing ELISpot analysis without a washing step. Since conventional ELISpot analysis has a washing step in the procedure, there is the problem that the work is complicated and the results are not stable. According to the method of the present disclosure, it is possible to use evanescent light to remove the washing step and significantly simplify the procedure, as well as to obtain more stable results.

Typical ELISpot is carried out in accordance with the following procedure: 1) a capture antibody is coated on a solid-phase substrate, such as a 96-well plate, 2) cells are cultured on the solid-phase substrate, 3) the cells are stimulated to induce secretion of material, 4) remove cells by washing, 5) add a labeled antibody, 6) remove labeled antibody not bound to the secreted material by washing, and 7) detect the labeled antibody.

On the other hand, in the washless ELISpot according to the present disclosure, for example, the following procedure can be used: 1) culture cells on a solid-phase substrate coated with a capture antibody, 2) stimulate the cells to cause secretion of material, 3) add a labeled antibody, and 4) irradiate evanescent light to detect the labeled antibody. The cells may be optionally removed after the cells are stimulated to cause secretion of material.

Therefore, some embodiments according to the present disclosure relates to a method for observing cell secretions, the method comprising: i) a step for preparing a solid-phase substrate on a surface of which a capture substance is immobilized, ii) a step for binding cell secretions to the capture substance, iii) a step for binding a fluorescently labeled substance to the cell secretion bound to the capture substance, iv) a step for irradiating the fluorescently labeled substance bound to the cell secretion with evanescent light, and v) a step for observing the generated fluorescent signal. In addition, some embodiments relates to the above-mentioned method, wherein the step for observing the signal comprises a step for using a microscope equipped with an imaging device to acquire an image containing one or more measurement target regions containing the fluorescently labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period. Further, some embodiments relates to the above-mentioned method, wherein the step for observing a signal includes a step for using a microscope equipped with an imaging device to acquire an image containing one or more measurement target regions containing a labeled substance, the observation of the labeled substance is carried out using fluorescence, and the magnification of the microscope is set such that the area of each measurement target region in the acquired image becomes $1\times$ or more and $90,000\times$ or less of the area of a pixel of an imaging element of the imaging device. It should be noted that the washless ELISpot according to the present disclosure does not include a washing step after the step for binding a fluorescently labeled substance to the cell secretion bound to the capture substance.

All documents mentioned in the present Specification are incorporated in entirety herein by reference. The examples of the present disclosure described below are for illustrative purposes only and do not limit the technical scope of the present disclosure. The technical scope of the present disclosure is limited only by the description in the claims. Changes to the present disclosure, for example, addition, deletion, and substitution of compositional requirements of the present disclosure, can be made to the extent of not deviating from the essence of the present disclosure.

## EXAMPLES

### Example 1: Chip preparation and system design

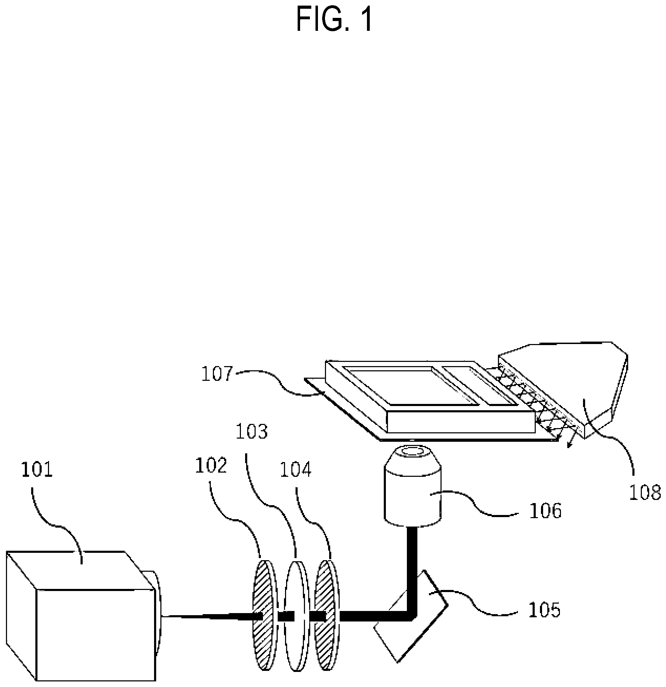

A waveguide chip for real-time secretion imaging was fabricated, each using quartz glass or borosilicate glass (S-BSL7) with a thickness of 0.15 mm or 0.5 mm. To minimize scattering of excitation light and to make the refractive index the same as that of the cell culture solution, amorphous fluoropolymer CYTOP (registered trademark) (Asahi Glass Co., Ltd.) was applied to both sides of the glass. Then, a CYTOP (registered trademark) sheet having 10,000 holes was attached to the glass. The chip was placed on a fully automated inverted fluorescence microscope (Ti2-E, Nikon) equipped with a high-resolution CMOS camera (Andor) and a stage-top incubator system (Tokai Hit). Objective lenses of $2\times$ (NA= 0.1), $4\times$ (NA= 0.2), $10\times$ (NA = 0.45), and $20\times$ (NA = 0.7) were used for the observation. The illumination device for the optical waveguide chip was developed by Yodaka Giken Co., Ltd. LDI-7 laser diode illuminator (89 North) was used as the light source (Figure 1).

### Example 2: Calibration of excitation light

Excitation calibration was carried out using 200 nm fluorescent beads. The beads were fixed to the glass surface, and a 640 nm laser was directly irradiated onto the glass. Fluorescent signal was imaged over the entire surface using a $20\times$ objective lens. The fluorescent signal per one bead was measured, and the unevenness of irradiation was calculated.

### Example 3: Real-time secretion imaging

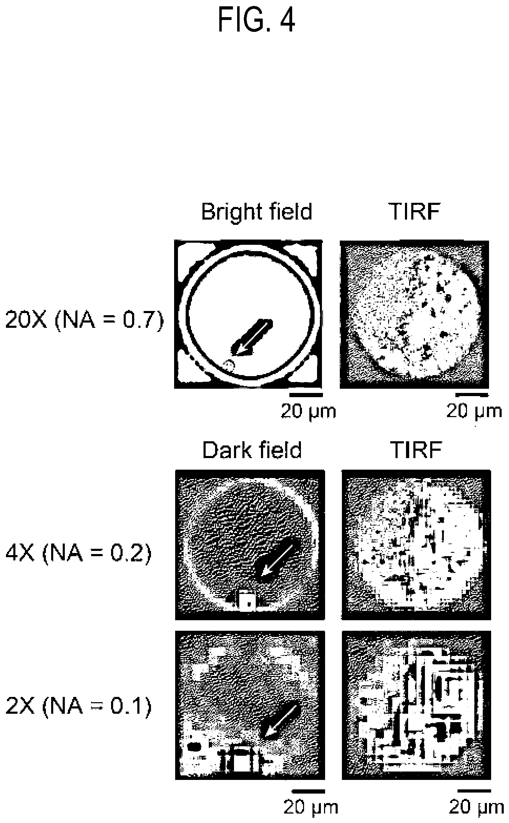

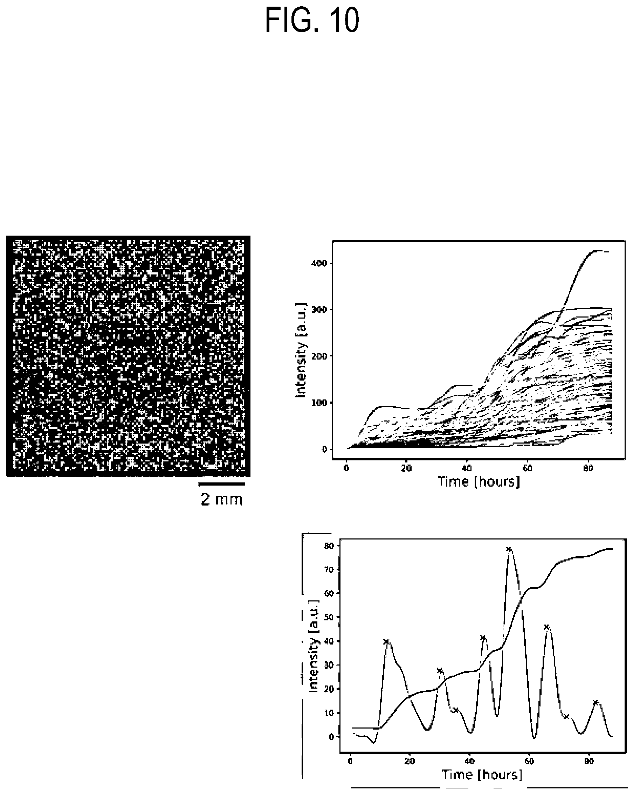

An anti-mouse interleukin-5 (IL-5) capture antibody was covalently bound to the glass surface. Mouse type 2 innate lymphoid cells (ILC2) were introduced into a 10,000-well chip. Then, anti-mouse IL-5 detection antibody bound to CF660R-labeled streptavidin was added, and the chip was immediately placed under the microscope. A set of bright-field and TIRF images of the entire cell culture chamber was acquired at regular intervals (Figures 4-7 and 10).

Example 4: Intensity of excitation light

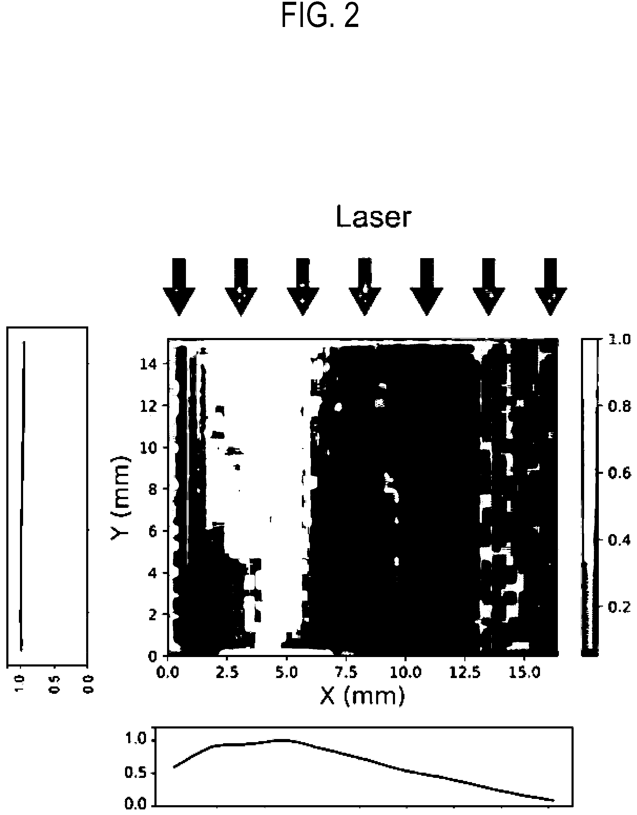

The intensity of the excitation light and the unevenness of the irradiation were investigated using 200 nm fluorescent beads. The laser light was introduced into the glass with high efficiency. There was almost no difference in the intensity of the excitation light between the entrance area and the exit area, confirming that the excitation light was not attenuated in the glass (Figure 2). The intensity of the incident light at the incident point varies depending on the location, but this can be corrected using the intensity distribution obtained in this experiment.

Example 5: Signal-to-Noise Ratio (SNR)

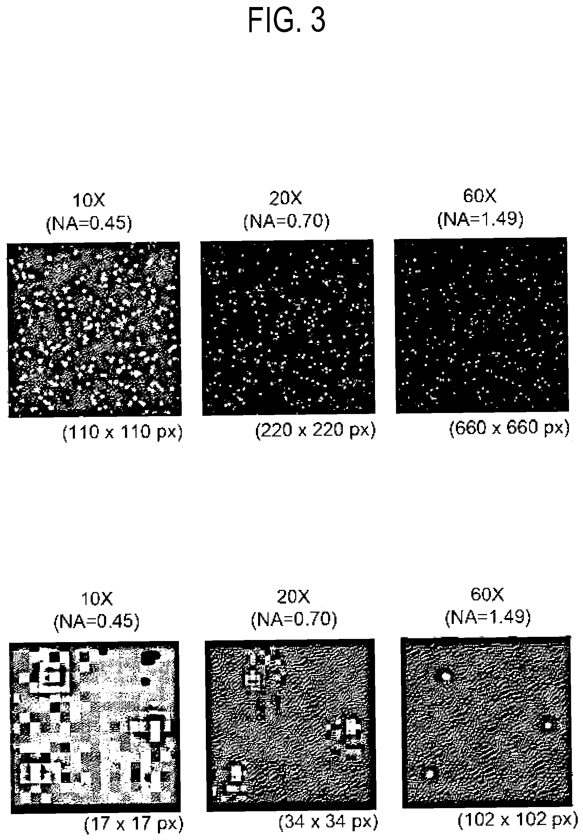

The signal from the fluorescent beads in each objective lens was quantified (Figure 3). In the present method, the intensity of the excitation light does not depend on the objective lens. Therefore, the total signal intensity obtained is proportional to the square of the numerical aperture (NA) of the objective lens. However, the signal-to-noise ratio (SNR) does not depend only on the numerical aperture. The signal (N) per one pixel of the detector is proportional to the square of the numerical aperture (NA) and inversely proportional to the square of the magnification (M), as shown in the following equation (K is a proportionality constant).

[Formula 1]

$$N = K \frac{NA^2}{M^2}$$

The SNR per one pixel is expressed as follows:

[Formula 2]

$$SNR = \frac{N_S}{\sqrt{\sigma_S^2 + \sigma_D^2 + \sigma_R^2}} = \frac{N_S}{\sqrt{N_B + \sigma_D^2 + \sigma_R^2}}$$

Here, $N_s$ is the fluorescent signal derived from cell secretion, and $\sigma_S$, $\sigma_D$, and $\sigma_R$ are the photon shot noise, dark current noise, and readout noise, respectively. The photon shot noise is caused by fluorescence $N_B$ derived from background light.
When the noise originating from the detector, $\sigma D^2$ and $\sigma R^2$, is represented by A; when the quantum efficiency of the detector is QE; when the width of a pixel of the imaging element of the detector is a ($\mu$m); when the density of fluorescent molecules bound near the glass substrate in the measurement region is $\mu$s ($\mu m^{-2}$); when the proportionality constant is Ks; when the density ratio of fluorescent molecules between the imaging element and the measurement region is rs; when the density of unbound fluorescent molecules in the medium, which constitutes background light, is $\mu$B ($\mu m^{-2}$); and when the proportionality constant is KB; the signal-to-noise ratio (SNR) per pixel is given by the following expression using A, NA, M, QE, a, $\mu$s, Ks, rs, $\mu$B, and KB.

[Formula 3]

$$SNR = \frac{N_S}{\sqrt{N_B + A}} = \frac{\dfrac{K_S \cdot r_S \cdot \mu_S \cdot a^2 \cdot QE \cdot NA^2}{M^2}}{\sqrt{\dfrac{K_B \cdot \mu_B \cdot a^2 \cdot QE \cdot NA^2}{M^2} + A}}$$

Here, the SNR of two objective lenses was compared. The ratio between the SNR of an objective lens with a numerical aperture NA and magnification M and an objective lens with a numerical aperture NA' and magnification M' was calculated as follows.

[Formula 4]

$$\frac{SNR}{SNR'} = \left(\frac{r_S}{r_S'}\right) \cdot \left(\frac{NA}{NA'}\right)^2 \cdot \left(\frac{M'}{M}\right)^2 \sqrt{\frac{\frac{K_B \cdot \mu_B \cdot a^2 \cdot QE \cdot NA'^2}{M'^2} + A}{\frac{K_B \cdot \mu_B \cdot a^2 \cdot QE \cdot NA^2}{M^2} + A}}$$

With both objective lenses, when the measurement target region is larger than the area of the imaging element and the noise from the detector is negligibly small, the following formula holds:

[Formula 5]

$$r_S = r_S'$$

$$\frac{K_B \cdot \mu_B \cdot a^2 \cdot QE \cdot NA'^2}{M'^2} \gg A$$

$$\frac{K_B \cdot \mu_B \cdot a^2 \cdot QE \cdot NA^2}{M^2} \gg A$$

Here, the ratio of the SNRs of the two objective lenses can be expressed as follows:

[Formula 6]

$$\frac{SNR}{SNR'} \cong \frac{NA/M}{NA'/M'}$$

Accordingly, when the fluorescent dye is distributed over an area larger than the imaging element and the noise from the detector is negligibly small compared to the fluorescent signal, the SNR is determined by the ratio between the numerical aperture and the magnification. This indicates that even if a low-magnification, low-numerical aperture objective lens is used, it is possible to obtain an SNR equal to or greater than that of a high-magnification, high-numerical aperture objective lens.

Example 6: Detection of single-cell secretion

To demonstrate that an optical waveguide chip using a low-magnification, low-numerical aperture objective lens can detect secretion signals from indivisual single cells, an experiment was carried out to detect IL-5 secretion from indivisual single cells in real time using mouse ILC2 stimulated with IL-33.

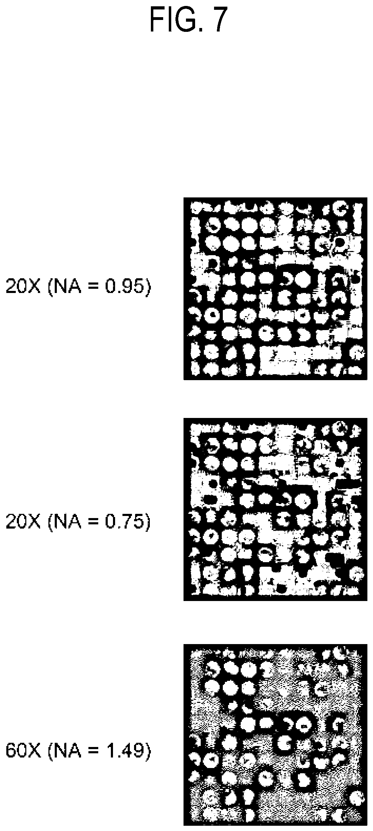

First, single-cell secretion of ILC2 was detected using a 20× objective lens (NA = 0.70). As shown in Figure 4, a secretion signal of indivisual single cells was successfully detected using a method similar to a previously-developed method using a 60× objective lens (NA = 1.49). Although the spatial resolution was slightly reduced, cells could be distinguished in the bright field (also see Figure 7).

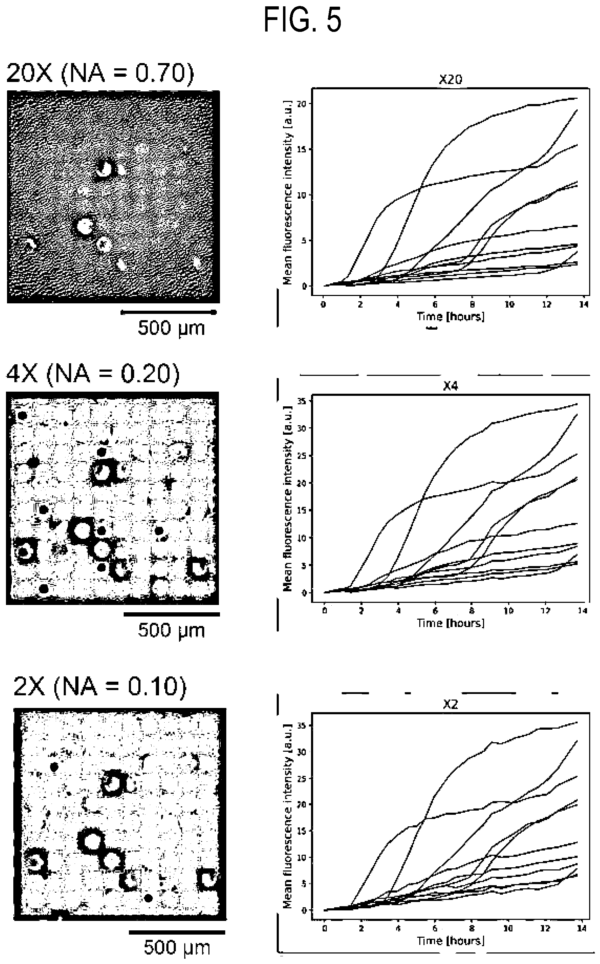

Next, a low-magnification objective lens was used to attempt detection of single-cell secretions. A 2× (NA = 0.1) or a 4× (NA = 0.1) objective lens with a larger NA/M than the 20× (NA = 0.70) objective lens was used. When the time course of the secretion signal of each well was calculated, as was theoretically predicted, the 2× and 4× objective lenses were confirmed to provide signal-to-noise ratios comparable to that of the 20× objective lens (Figure 5).

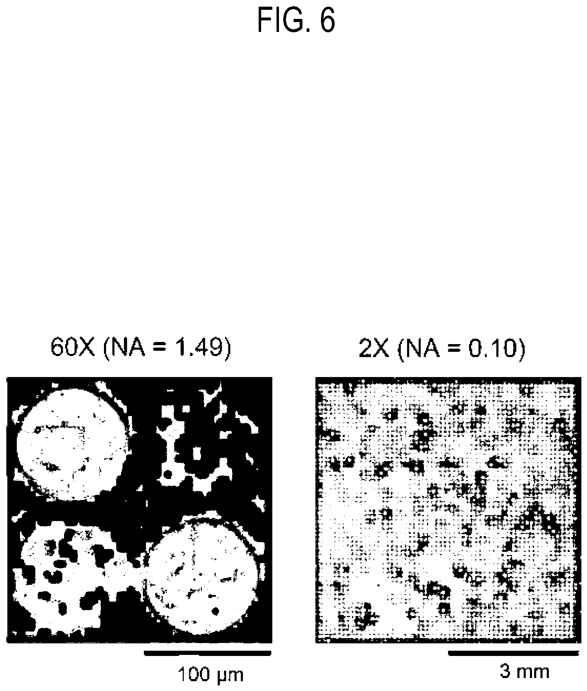

This result indicates that the objective lens can be flexibly selected in accordance with the spatial resolution requirements. When information relating to cell morphology is not required, single-cell secretions can be imaged with a 2× or 4× objective lens. Since the size of the observation region is inversely proportional to the square of the magnification, when an optical waveguide chip with a 2× objective lens is used, it is possible to observe a region that is 900 times larger than that of a previously-developed method that used TIRFM with a 60× objective lens (Figure 6). That is, time-lapse photography of a wide region, which conventionally took more than an hour per cycle, can be done at intervals of several seconds.

Example 7: Combinations of different cameras and objective lens magnifications

SNR per pixel was simulated when measuring the sizes of different measurement targets using four types of objective lens magnifications with different cameras (= different pixel sizes), which was compared with the SNR when using a camera with a pixel size of 0.61 $\mu$m or when using a 60$\times$ objective lens.

More specifically, the SNR was calculated for each objective lens using the following formula. The noise from the detector, the quantum efficiency of the detector, the width ($\mu$m) of the detector's imaging element, the density ($\mu$m$^{-2}$) of fluorescent molecules bound near the glass substrate in the measurement target region, the proportionality constant, the ratio between the fluorescent molecule density in the imaging element and in the measurement target region, the density ($\mu$m$^{-2}$) of unbound fluorescent molecules in the medium, which serves as background light, and the proportionality constant were set to appropriate values, and the SNR per one pixel was calculated and plotted.

[Formula 7]

$$SNR = \frac{N_S}{\sqrt{N_B + A}} = \frac{\dfrac{K_S \cdot r_S \cdot \mu_S \cdot a^2 \cdot QE \cdot NA^2}{M^2}}{\sqrt{\dfrac{K_B \cdot \mu_B \cdot a^2 \cdot QE \cdot NA^2}{M^2} + A}}$$

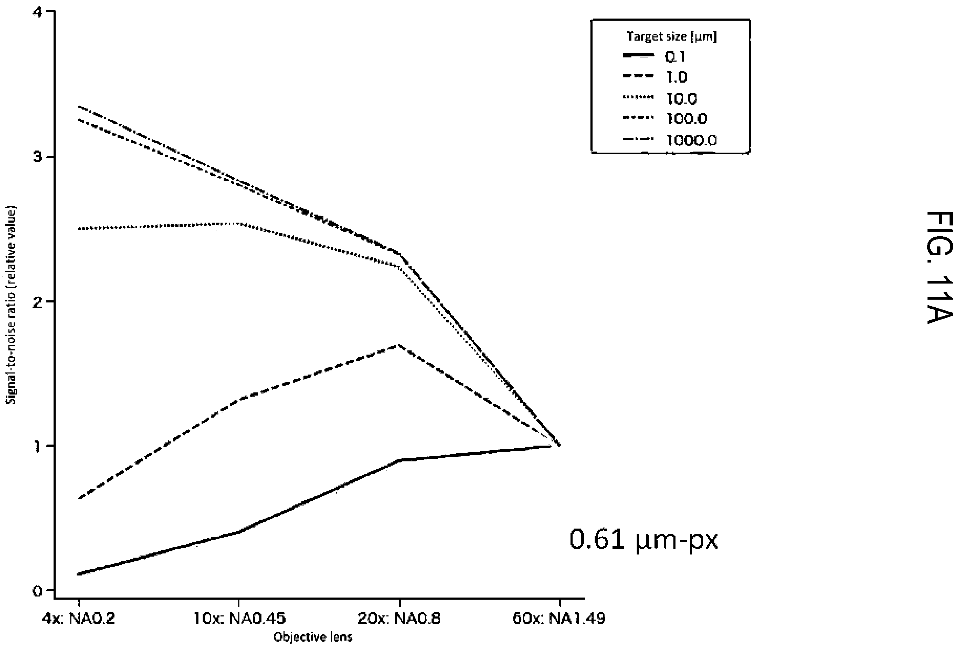

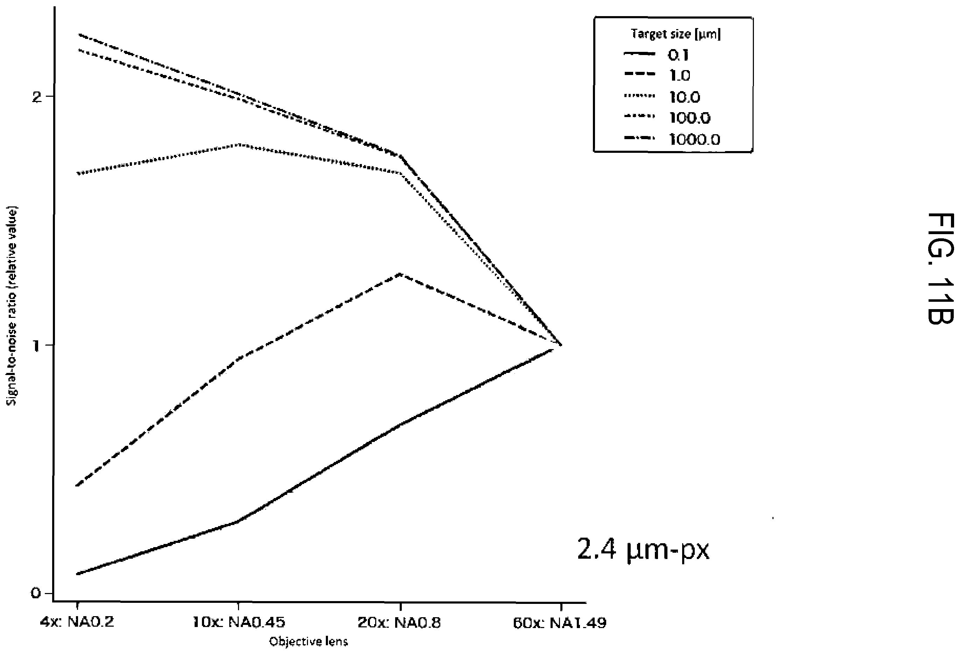

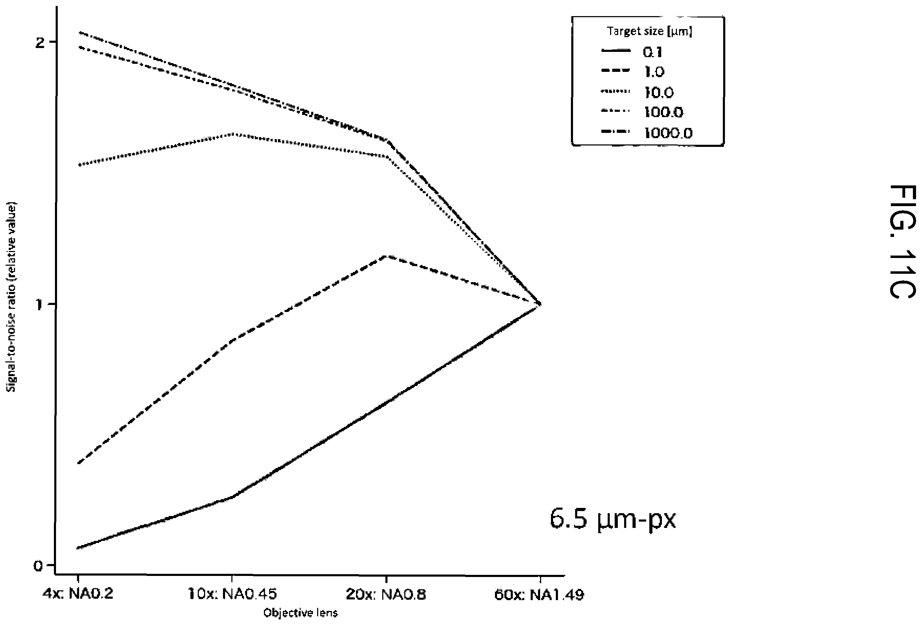

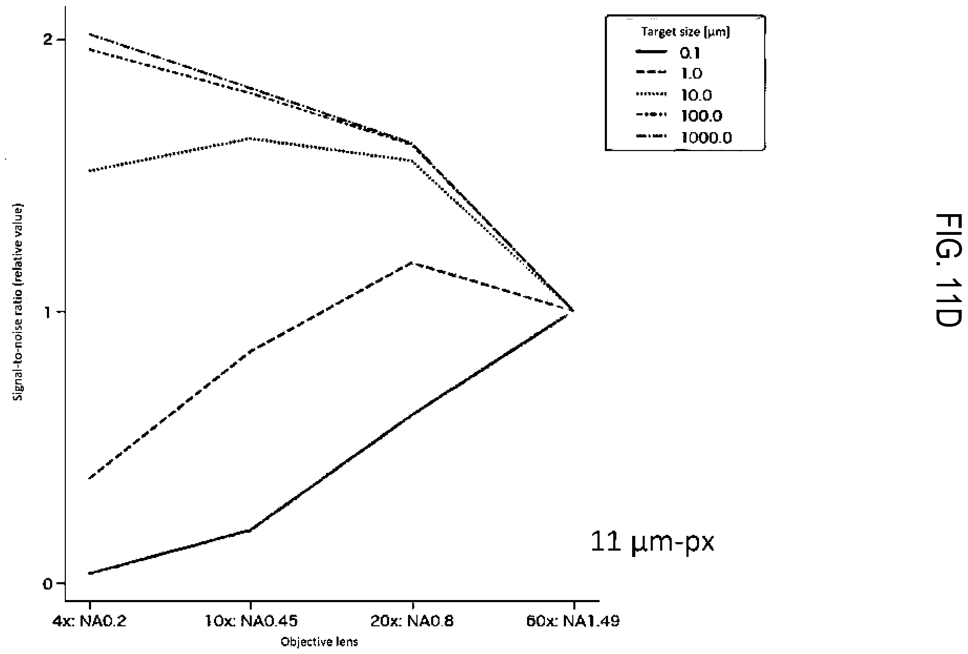

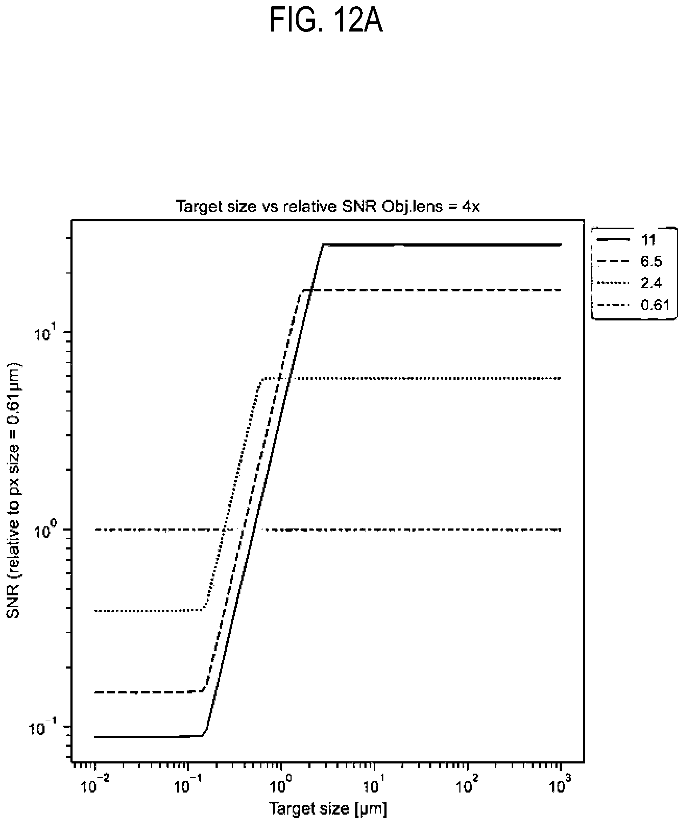

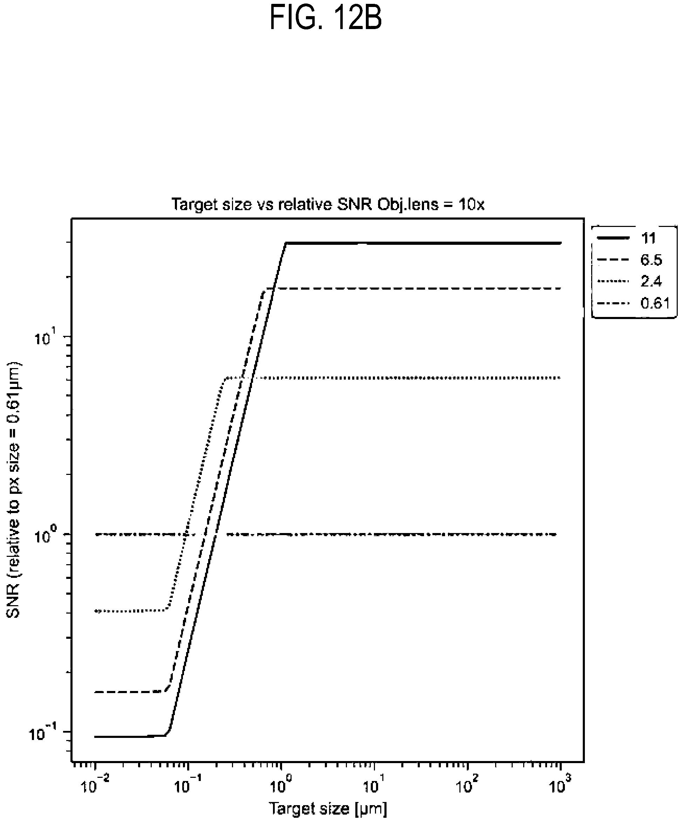

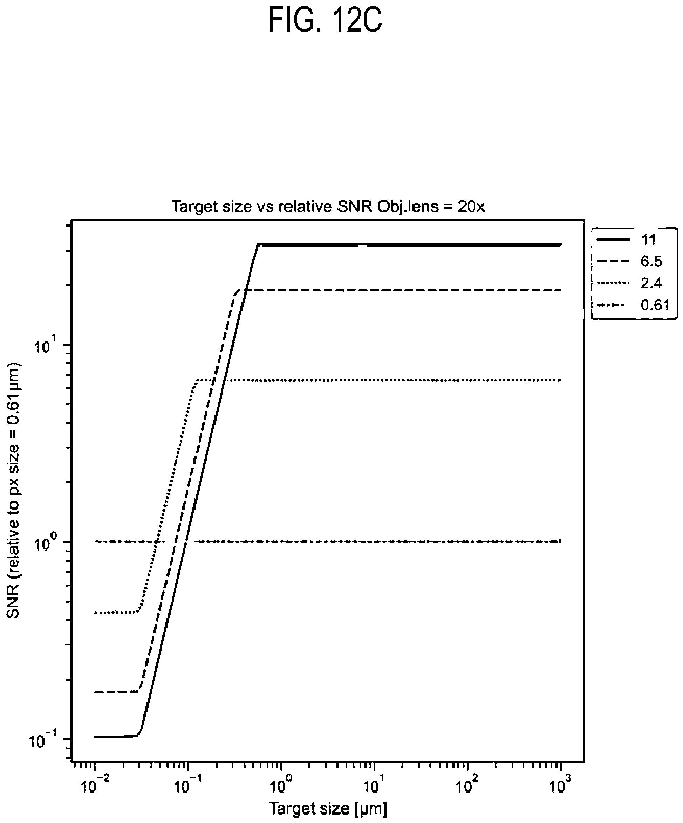

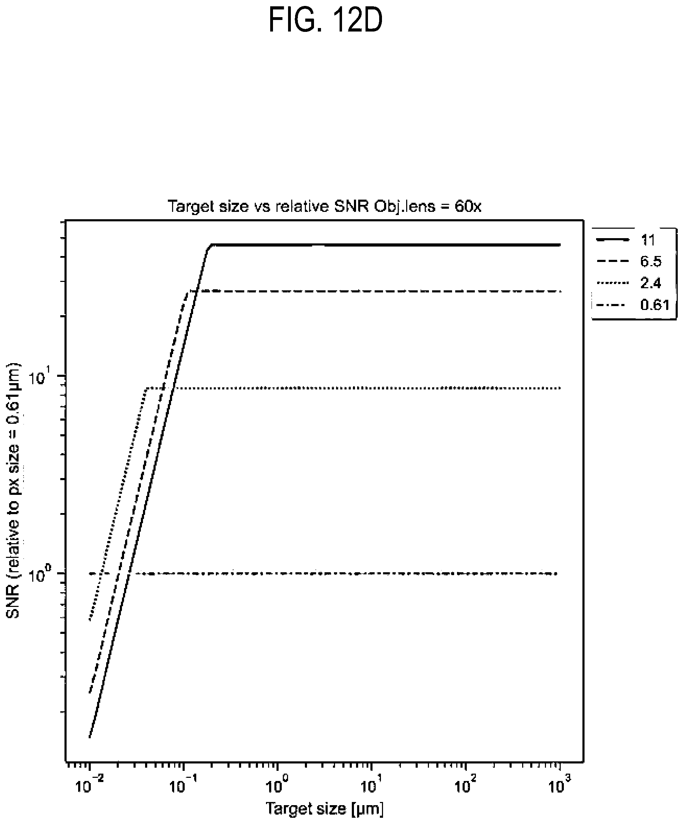

Assuming that fluorescent molecules are uniformly distributed within a circle of radius r, the SNR was calculated while changing the radius r and plotted for each objective lens. The results are shown in Figures 11A-D. When r is small, the NA is dominant, and when r is large (the diameter of the projected image is greater than or equal to the pixel size), the SN ratio is determined by NA/M. In addition, it can be seen from Figures 12A to 12D, which show the same results on different axes, that when r is large and the diameter of the image projected onto the element surface is larger than one pixel of the imaging element, a better S/N ratio can be obtained by using a magnification of 20$\times$ or less than that when using a 60$\times$ magnification.

Example 8: Imaging of inflammatory cytokine secretion from RAW264.7 cells

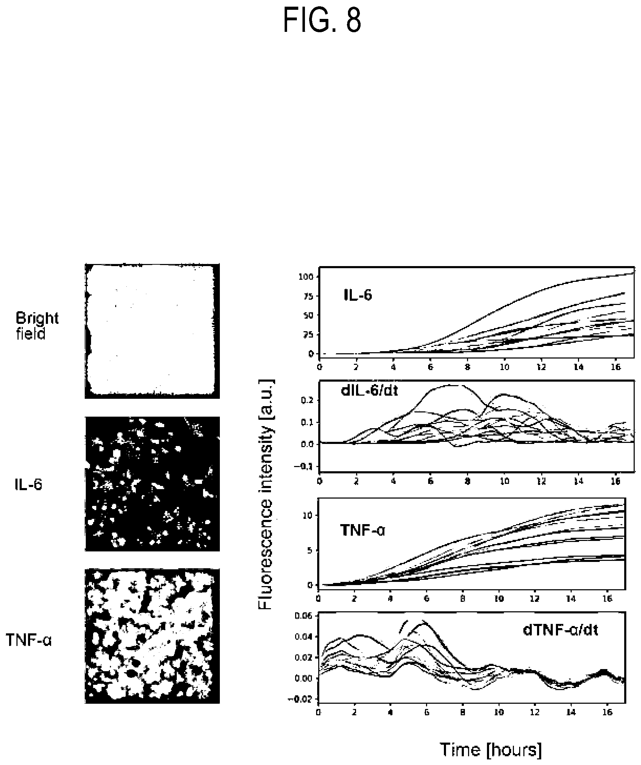

Anti-mouse IL-6 capture antibody and anti-mouse TNF-$\alpha$ capture antibody were each covalently bound to the glass surface. RAW264.7 cells were introduced into the optical waveguide chip and stimulated with lipopolysaccharide (LPS). Then, anti-mouse IL-6 detection antibody bound to CF660R-labeled streptavidin and anti-mouse TNF-$\alpha$ detection antibody bound to Cy3-labeled streptavidin were added, and the chip was immediately placed under the microscope. A set of bright-field and TIRF images of the entire cell culture chamber was acquired at regular intervals. After quantifying the secretion signal around each cell, noise was removed using a low-pass filter, and the differential value was obtained to calculate the instantaneous secretion rate (Figure 8).

Example 9: Imaging of IL-1$\beta$ secretion during pyroptosis in mouse alveolar macrophages

An anti-mouse IL-1$\beta$ capture antibody was covalently bound to the glass surface. Mouse alveolar macrophage cells primed with Pam3CSK4 were introduced into the optical waveguide chip and stimulated with Nigericin. Then, anti-mouse IL-1$\beta$ detection antibody bound to CF660R-labeled streptavidin and SYTOX Orange Dead Cell Stains were added, and the chip was immediately placed under the microscope. A set of bright-field images of the entire cell culture chamber, TIRF images of IL-1$\beta$ secretion, and fluorescent images of SYTOX Orange Dead Cell Stains was acquired at regular intervals. After quantifying the IL-1$\beta$ secretion signal around each cell, noise was removed using a low-pass filter, and the differential value was obtained to calculate the instantaneous secretion rate. In addition, the SYTOX Orange fluorescent signal of the cells was quantified to examine the timing of cell death and IL-1$\beta$ secretion (Figure 9).

Example 10: Secretion measurements under multiple conditions (application to drug screening)

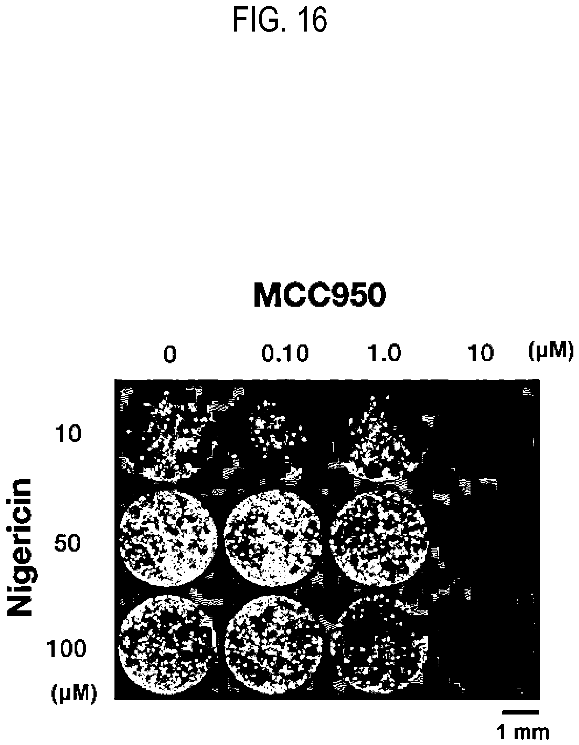

Mouse alveolar macrophage cells were primed with 100 ng/mL Pam3csk4 and then introduced into a 12-chamber waveguide chip. The concentrations of pyroptosis-inducing stimulant Nigericin and its inhibitor MCC950 were changed to observe cell death (pyroptosis) and IL-1$\beta$ release under each condition. The result is shown in Figure 16.

Example 11: Measurement of human peripheral blood monocyte secretion

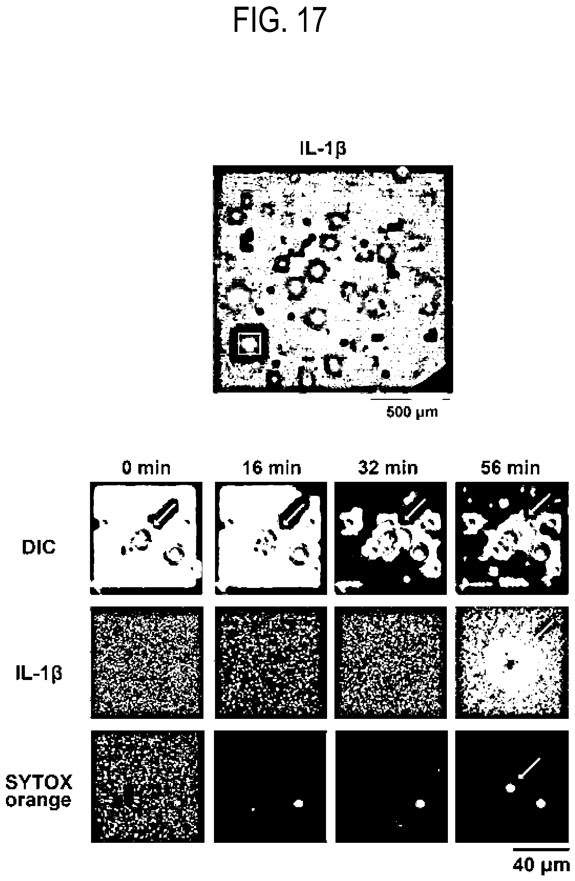

Primed with Pam3csk4 and stimulated with Nigericin. The result is shown in Figure 17. As shown in Figure 17, by combining with differential interference observation, changes in cell morphology and the timing of IL-1$\beta$ release at the time of pyroptosis were successfully visualized.

Example 12: Long-term cell culture and simultaneous imaging of three types of secretion

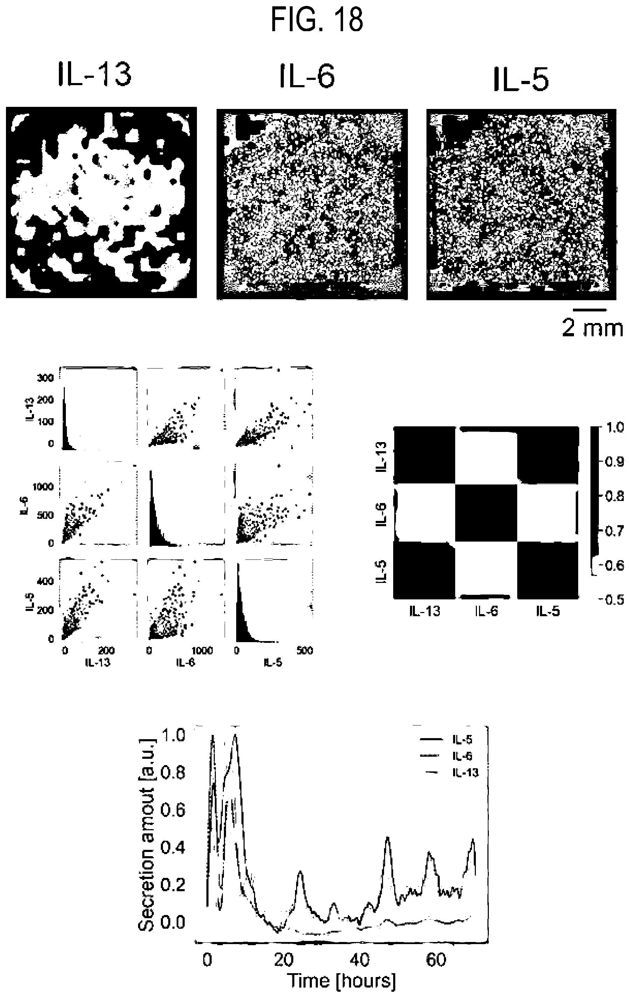

Mouse ILC2 cells were introduced into a 10,000-well waveguide chip and cultured on a microscope for more than three days, while performing three-color secretion imaging (IL-5, IL-6, and IL-13). The correlation between the respective amounts of cytokine secretion was determined. In addition, the secretion signals were differentiated over time, which allowed investigation of correlation between the respective cytokine secretion dynamics. The result is shown in Figure 18.

Example 13: Cancer Immunology

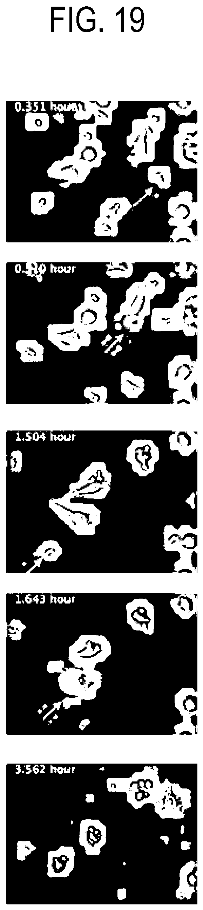

Mouse gastric cancer cells were co-cultured with CTLs, and the secretion of cytotoxic Granzyme B was visualized. The acquired secretion signals were differentiated over time, and superimposed with a differential interference image. After adhering to the surface of the cancer cells, CTLs were observed secreting granzyme B and inducing apoptosis of the cancer cells. The result is shown in Figure 19.

**INDUSTRIAL APPLICABILITY**

The present inventors used the optical waveguide chip of the present disclosure to realize a wide-field total internal reflection fluorescence microscope across the entire glass surface, and developed a high-throughput system that detects single-cell secretions in real time. Furthermore, by using a low-magnification objective lens, single-cell secretion signals were successfully detected over a wide region, without degrading the S/N ratio. The present system can be applied to observation of cell-secretion-related events that occur in a time scale of seconds, and to high-throughput screening of secretory cells. In addition, the method and device according to the present disclosure can simplify and reduce the size of the device necessary for imaging and reduce the costs of the product by using an objective lens with lower magnification compared to conventional devices.

**DESCRIPTIONS OF THE REFERENCE SYMBOLS**

101 Camera
102 Fluorescent filter
103 Imaging lens
104 Fluorescent filter
105 Mirror
106 Objective lens
107 Chip
108 Illuminator
201 Total internal reflection angle adjustment chamber
202 Partition
203 Sample chamber
204 Light source
205 Waveguide

**Claims**

1.   A method for observing a target in a solution, the method comprising:

   a step for using a microscope equipped with an imaging device to acquire an image containing one or more measurement target regions containing the target,
   wherein the observation of the target is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

2.   The method according to claim 1, wherein the target is a cell, a cell content, cell secretions, or a microparticle.

3. The step according to claim 2, further comprising a step for preparing a chip having one or more wells that can accommodate cells on a per-cell basis or on a per-cell-unit basis, and a step for accommodating cells in the plurality of wells of the chip on a per-cell basis or a per-cell-unit basis, wherein the one or more wells correspond to the one or more measurement target regions.

4. The method according to any one of claims 1 to 3, wherein the waveguide is configured to maintain an irradiation angle of the total internal reflection illumination that irradiates the target.

5. The method according to any one of claims 1 to 4, wherein both sides of the waveguide comprise a coating of CYTOP (registered trademark) or a substance having a refractive index of 1.34.

6. The method according to any one of claim 1 to 5, wherein the waveguide is configured to reduce periodic brightening and darkening of the total internal reflection illumination that irradiates the target.

7. The method according to any one of claims 1 to 6, wherein the waveguide has a thickness of 0.5 mm or less.

8. The method according to any one of claims 1 to 7, wherein the magnification of the microscope is set such that the area of each measurement target region in an acquired image is $1\times$ or more and $90,000\times$ or less of the area of a pixel of an imaging element of the imaging device.

9. The method according to any one of claims 1 to 8, wherein the magnification of the microscope is set such that the area of each measurement target region in an acquired image becomes essentially equal to the area of a pixel of an imaging element of the imaging device.

10. The method according to any one of claims 1 to 9, wherein the magnification of the microscope is set such that the area of each measurement target region in an acquired image becomes greater than the area of a pixel of an imaging element of the imaging device.

11. The method according to any one of claims 1 to 10, wherein the microscope is configured to have a magnification of less than $60\times$, $50\times$ or less, $20\times$ or less, $4\times$ or less, or approximately $2\times$.

12. The method according to any one of claims 3 to 11, wherein the number of wells on a chip is 1,000 or more.

13. The method according to any one of claims 3 to 12, wherein a waveguide is included in a chip.

14. The method according to any one of claims 3 to 13, wherein a total internal reflection angle adjustment chamber is included in a chip.

15. The method according to any one of claims 1 to 14, wherein the magnification of the microscope is set such that each measurement target region in an acquired image corresponds to a pixel of an imaging element of the imaging device at a ratio of substantially 1:1 to 1:10,000.

16. The method according to any one of claims 1 to 15, wherein each well can accommodate a cell or a cell unit to be observed, and has a size corresponding to a pixel of an imaging element of the imaging device at a ratio of substantially 1:1 to 1:10,000, at a magnification available in the microscope.

17. The method according to any one of claims 1 to 16, wherein the microscope is configured to have a numerical aperture of 1.0 or less.

18. The method according to any one of claims 1 to 17, wherein the microscope is configured such that numerical aperture / magnification is 0.03 or greater.

19. The method according to any one of claims 1 to 18, wherein the method is for observing the activity of indivisual living cells.

20. The method according to any one of claims 1 to 19, wherein the method is for observing a response of indivisual living cells to an external stimulus.

21. A chip, comprising:

    i) at least one sample chamber,
    ii) at least one waveguide, and
    iii) at least one total internal reflection angle adjustment chamber.

22. The chip according to claim 21, wherein the sample chamber comprises a plurality of wells.

23. The chip according to claim 21, wherein the sample chamber comprises a material having a lower refractive index than the refractive index of the total internal reflection angle adjustment chamber.

24. The chip according to claim 21, wherein the waveguide is in contact with the sample chamber and/or the total internal reflection angle adjustment chamber.

25. The chip according to claim 21, wherein a light-incident surface of the waveguide is mirror-finished or polished.

26. The chip according to claim 21, wherein the surface of the waveguide opposite to the sample chamber has a coating.

27. The chip according to claim 21, wherein the total internal reflection angle adjustment chamber is provided at a position upstream of the sample chamber as viewed from a light source.

28. The chip according to claim 21, wherein the total internal reflection angle adjustment chamber contains a liquid, a gel, or a solid having a refractive index similar to that of a sample to be observed.

29. The chip according to claim 21, wherein the total internal reflection angle adjustment chamber contains glycerin, silicon oil, an aqueous solution, or a Cargille refractive index liquid.

30. The chip according to claim 29, wherein the waveguide is

    i) configured so as to limit the irradiation angle of the total internal reflection illumination that irradiates a labeled substance bound to a capture substance,
    ii) configured so as to maintain the irradiation angle of the total internal reflection illumination that irradiates a labeled substance bound to a capture substance, or
    iii) configured to reduce periodic brightening and darkening of the total internal reflection illumination that irradiates a labeled substance bound to a capture substance.

31. The chip according to any one of claims 21 to 30, wherein a member defining the total internal reflection angle adjustment chamber and/or the sample chamber comprises a member having low light transmittance.

32. A system for observing a target in a solution, the system comprising:

    an imaging device equipped with an objective lens for acquiring an image of a well containing the target,
    the chip according to any one of claims 21 to 31, and
    a light source for total internal reflection illumination,
    wherein,
    the imaging device is configured to acquire an image containing one or more measurement target regions containing the target.

33. The system according to claim 32, wherein the chip has a plurality of wells that can accommodate cells on a per-cell basis or on a per-cell-unit basis.

34. A method for operating a system for observing a target, wherein the system comprises an imaging device equipped with an objective lens for acquiring an image of a well containing the target, the chip according to any one of claims 21 to 31, and a light source for total internal reflection illumination, and the imaging device is configured to acquire an image containing one or more measurement target regions containing the target.

35. A method for analyzing cell activity, wherein the method comprises a step for applying an external stimulus to an observation target, a step for operating a system for observing the target and acquiring an image containing one or more measurement target regions containing the target, and a step for analyzing the image to analyze the cell activity occurring in response to the external stimulus, and

the system comprises an imaging device equipped with an objective lens for acquiring an image of a well containing the target, the chip according to any one of claims 21 to 31, and a light source for total internal reflection illumination, and the imaging device is configured to acquire an image containing one or more measurement target regions containing the target.

**36.** A method for observing a labeled substance, the method comprising:

i) a step for preparing a solid-phase substrate on a surface of which a capture substance is immobilized,
ii) a step for binding an inactive form of a labeled substance to the capture substance,
iii) a step for applying a first decaying stimulus to the inactive form of the labeled substance to convert the labeled substance to an active form,
iv) a step for applying a second decaying stimulus to the active form of the labeled substance to generate a signal from the label, and
v) a step for observing the generated signal,

wherein

the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

**37.** A method for observing a labeled substance, the method comprising:

i) a step for preparing a solid-phase substrate on a surface of which a capture substance is immobilized,
ii) a step for binding an intermediary substance to the capture substance,
iii) a step for binding a labeled substance to the intermediary substance,
iv) a step for applying a first decaying stimulus to the labeled substance to generate a signal from the label,
v) a step for observing the generated signal, and
vi) a step for applying a second decaying stimulus to the intermediary substance to release the bond between the capture substance and the labeled substance,

wherein

the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

**38.** A method for observing a labeled substance, the method comprising:

i) a step for preparing a solid-phase substrate on a surface of which a capture substance is immobilized,
ii) a step for binding a labeled substance to the capture substance,
iii) a step for applying a first decaying stimulus to the labeled substance to generate a signal from the label,
iv) a step for observing the generated signal,
v) a step for applying a second decaying stimulus to the labeled substance to generate a de-labeled intermediary substance,
vi) a step for binding the labeled substance to the intermediary substance, and
vii) a step for repeating the steps iii) to vi), wherein

the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

39. A method for determining a base sequence of a nucleic acid, the method comprising:

i) a step for preparing a solid-phase substrate on a surface of which a template nucleic acid is immobilized,
ii) a step for hybridizing a primer to the template nucleic acid,
iii) a step for adding a mixed solution containing polymerase and labeled nucleic acids having protective modifications corresponding to adenosine triphosphate, cytidine triphosphate, guanosine triphosphate, and thymidine triphosphate,
iv) a step for incorporating one labeled nucleic acid on the basis of complementarity with the template nucleic acid and linking the labeled nucleic acid with a polynucleotide derived from a primer,
v) a step for applying first to fourth attenuating stimuli to the labeled nucleic acid to generate and observe a signal from the label,
vi) a step for applying a fifth and/or a sixth decaying stimulus to the labeled nucleic acid to remove the protective modification and generate a polynucleotide that has a de-labeled intermediary nucleic acid, and
vii) a step for repeating the steps iv) to vi),

wherein
the step for observing the signal comprises a step for using a microscope equipped with an imaging device to acquire an image containing one or more measurement target regions containing the labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

40. The method according to claim 39, wherein excitation of fluorescence is carried out by means of total internal reflection illumination, and the total internal reflection illumination is carried out using a waveguide.

41. A system for observing a target, the system comprising:

an imaging device equipped with an objective lens for acquiring an image of a well containing a cell or a microparticle, and
a light source for total internal reflection illumination,
wherein,
the imaging device is configured to acquire an image containing one or more measurement target regions containing the target, and
the magnification of the objective lens is configured such that the area of each measurement target region in an acquired image becomes 1× or more and 90,000× or less of the area of a pixel of an imaging element of the imaging device.

42. The system according to claim 41, further comprising a chip having a plurality of wells that can accommodate cells on a per-cell basis or on a per-cell-unit basis.

43. A method for operating a system for observing a target, wherein the system comprises an imaging device equipped with an objective lens for acquiring an image of a well containing a cell or a microparticle, and a light source for total internal reflection illumination, and the imaging device is configured to acquire an image containing one or more measurement target regions containing the target, and the method comprises a step of the imaging device acquiring an image in which the area of each measurement target region in an acquired image becomes 1× or more and 90,000× or less of the area of a pixel of an imaging element of the imaging device.

44. A method for analyzing cell activity, wherein the method comprises a step for applying an external stimulus to an observation target, a step for operating a system for observing the target and acquiring an image containing one or more measurement target regions containing the target, and a step for analyzing the image to analyze the cell activity occurring in response to the external stimulus, and
the system comprises an imaging device equipped with an objective lens for acquiring an image of a well containing a cell or a microparticle, and a light source for total internal reflection illumination, the imaging device is configured to acquire an image containing one or more measurement target regions containing the target, and the magnification of the objective lens is configured such that the area of each measurement target region in the acquired image becomes $1\times$ or more and $90,000\times$ or less of the area of a pixel of an imaging element of the imaging device.

**45.** A method for observing a labeled substance, the method comprising:

 i) a step for preparing a solid-phase substrate on a surface of which a capture substance is immobilized,
 ii) a step for binding an inactive form of a labeled substance to the capture substance,
 iii) a step for applying a first decaying stimulus to the inactive form of the labeled substance to convert the labeled substance to an active form,
 iv) a step for applying a second decaying stimulus to the active form of the labeled substance to generate a signal from the label, and
 v) a step for observing the generated signal,

 wherein
the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

**46.** A method for observing a labeled substance, the method comprising:

 i) a step for preparing a solid-phase substrate on a surface of which a capture substance is immobilized,
 ii) a step for binding an intermediary substance to the capture substance,
 iii) a step for binding a labeled substance to the intermediary substance,
 iv) a step for applying a first decaying stimulus to the labeled substance to generate a signal from the label,
 v) a step for observing the generated signal, and
 vi) a step for applying a second decaying stimulus to the intermediary substance to release the bond between the capture substance and the labeled substance,

 wherein
the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

**47.** A method for observing a labeled substance, the method comprising:

 i) a step for preparing a solid-phase substrate on a surface of which a capture substance is immobilized,
 ii) a step for binding a labeled substance to the capture substance,
 iii) a step for applying a first decaying stimulus to the labeled substance to generate a signal from the label,
 iv) a step for observing the generated signal,
 v) a step for applying a second decaying stimulus to the labeled substance to generate a de-labeled intermediary substance,
 vi) a step for binding the labeled substance to the intermediary substance, and
 vii) a step for repeating the steps iii) to vi), wherein

the step for observing a signal includes a step for using a microscope equipped with an imaging device to acquire an image containing one or more measurement target regions containing a labeled substance, the observation is carried out using fluorescence, and the magnification of the microscope is set such that the area of each measurement target region in an acquired image becomes $1\times$ or more and $90,000\times$ or less of the area of a pixel of an imaging element of the imaging device.

48. A method for determining a base sequence of a nucleic acid, the method comprising:

i) a step for preparing a solid-phase substrate on a surface of which a template nucleic acid is immobilized,
ii) a step for hybridizing a primer to the template nucleic acid,
iii) a step for adding a mixed solution containing polymerase and labeled nucleic acids having protective modifications corresponding to adenosine triphosphate, cytidine triphosphate, guanosine triphosphate, and thymidine triphosphate,
iv) a step for incorporating one labeled nucleic acid on the basis of complementarity with the template nucleic acid and linking the labeled nucleic acid with a polynucleotide derived from a primer,
v) a step for applying first to fourth attenuating stimuli to the labeled nucleic acid to generate and observe a signal from the label,
vi) a step for applying a fifth and/or a sixth decaying stimulus to the labeled nucleic acid to remove the protective modification and generate a polynucleotide that has a de-labeled intermediary nucleic acid, and
vii) a step for repeating the steps iv) to vi),

wherein
the step for observing a signal includes a step for using a microscope equipped with an imaging device to acquire an image containing one or more measurement target regions including a template nucleic acid, the observation is carried out using fluorescence, and the magnification of the microscope is configured such that the area of each measurement target region in an acquired image becomes 1× or more and 90,000× or less of the area of a pixel of an imaging element of the imaging device.

49. The method according to claim 48, wherein excitation of fluorescence is carried out by means of total internal reflection illumination, and the total internal reflection illumination is carried out using a waveguide.

50. A method for observing cell secretions, the method comprising:

i) a step for preparing a solid-phase substrate on a surface of which a capture substance is immobilized,
ii) a step for binding cell secretions to the capture substance,
iii) a step for binding a fluorescently labeled substance to the cell secretion bound to the capture substance,
iv) a step for irradiating the fluorescently labeled substance bound to the cell secretion with evanescent light, and
v) a step for observing the generated fluorescent signal,

wherein
the step for observing the signal comprises a step for using a microscope equipped with an imaging device to acquire an image containing one or more measurement target regions containing the fluorescently labeled substance; the observation is carried out using fluorescence; excitation of the fluorescence is carried out by means of total internal reflection illumination; the total internal reflection illumination is carried out using a waveguide; the waveguide is configured to limit the irradiation angle of the total internal reflection illumination that irradiates the target; and a liquid, a solid, or a gel having a refractive index similar to that of the solution containing the target is provided in an upstream portion of the waveguide so as to have a width greater than or equal to the reflection period.

51. The method according to claim 50, wherein the method does not comprise a washing step after the step for binding a fluorescently labeled substance to the cell secretion bound to the capture substance.

# FIG. 1

# FIG. 2

# FIG. 3

# FIG. 4

# FIG. 5

20X (NA = 0.70)

500 µm

4X (NA = 0.20)

500 µm

2X (NA = 0.10)

500 µm

# FIG. 6

60X (NA = 1.49)　　　　　2X (NA = 0.10)

100 µm　　　　　　　3 mm

# FIG. 7

20X (NA = 0.95)

20X (NA = 0.75)

60X (NA = 1.49)

# FIG. 8

# FIG. 9

# FIG. 10

2 mm

FIG. 11A

# FIG. 11B

# FIG. 11C

# FIG. 11D

# FIG. 12A

Target size vs relative SNR Obj.lens = 4x

# FIG. 12B

Target size vs relative SNR Obj.lens = 10x

# FIG. 12C

Target size vs relative SNR Obj.lens = 20x

# FIG. 12D

# FIG. 13

## FIG. 14

# FIG. 15A

(i)    (ii)    (iii)    (iv)

(i) → (ii) → (iii) → (iv)

Decaying stimulus A

Decaying stimulus B

# FIG. 15B

(i) → (ii) → (iii) → (iv) → (v) → (vi) → (i)

ξξξ Decaying stimulus A

ξξξ Decaying stimulus B

# FIG. 15C

(i) → (ii) → (iii) → (iv) → (v) → (i)

Decaying stimulus A

Decaying stimulus B

# FIG. 16

**MCC950**

# FIG. 17

IL-1β

500 μm

0 min  16 min  32 min  56 min

DIC

IL-1β

SYTOX orange

40 μm

# FIG. 18

# FIG. 19

## INTERNATIONAL SEARCH REPORT

| International application No. |
|---|
| **PCT/JP2024/005078** |

| | |
|---|---|
| **A.** | **CLASSIFICATION OF SUBJECT MATTER** |

**G01N 21/64**(2006.01)i
FI: G01N21/64 E; G01N21/64 G

According to International Patent Classification (IPC) or to both national classification and IPC

| | |
|---|---|
| **B.** | **FIELDS SEARCHED** |

Minimum documentation searched (classification system followed by classification symbols)

G01N21/64

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2009/057755 A1 (NATIONAL INSTITUTE OF ADVANCED INDUSTRIAL SCIENCE AND TECHNOLOGY) 07 May 2009 (2009-05-07) paragraphs [0002], [0005], [0018], [0020], [0025], fig. 2 | 1-5, 12-14, 21-22, 24, 26-34, 50-51 |
| Y | | 6-11, 15-20, 25, 35, 41-44 |
| A | | 23, 36-40, 45-49 |
| Y | JP 2022-026750 A (HAMAMATSU PHOTONICS KK) 10 February 2022 (2022-02-10) paragraphs [0023], [0025] | 6-7, 25 |
| Y | JP 2010-503847 A (OXFORD GENE TECHNOLOGY IP LIMITED) 04 February 2010 (2010-02-04) paragraph [0025] | 8-11, 15-18, 41-44 |
| Y | WO 2007/034796 A1 (NATIONAL UNIVERSITY CORPORATION HAMAMATSU UNIVERSITY SCHOOL OF MEDICINE) 29 March 2007 (2007-03-29) p. 12, the last line to p. 14, line 1 | 19-20, 35, 44 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/005078**

| Patent document cited in search report | | | Publication date (day/month/year) | Patent family member(s) | | | Publication date (day/month/year) |
|---|---|---|---|---|---|---|---|
| WO | 2009/057755 | A1 | 07 May 2009 | (Family: none) | | | |
| JP | 2022-026750 | A | 10 February 2022 | (Family: none) | | | |
| JP | 2010-503847 | A | 04 February 2010 | US | 2010/0025567 | A1 | |
| | | | | paragraph [0037] | | | |
| | | | | WO | 2008/032096 | A2 | |
| | | | | WO | 2008/032100 | A1 | |
| | | | | WO | 2008/032106 | A2 | |
| | | | | EP | 2067021 | A2 | |
| WO | 2007/034796 | A1 | 29 March 2007 | US | 2009/0052021 | A1 | |
| | | | | paragraphs [0090]-[0095] | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11041848 B

**Non-patent literature cited in the description**

- **Y. SHIRASAKI et al.** Real-time single-cell imaging of protein secretion. *Sci. Rep.*, 2014, vol. 4, 4736
- **Y. TANAKA et al.** Widefield real-time single-cell secretion imaging with optical waveguide technique. *2017 19th International Conference on Solid-State Sensors, Actuators and Microsystems (TRANSDU-CERS)*, 2017, 1580-1583

- *Genomics Proteomics Bioinformatics.*, February 2013, vol. 11 (1), 34-40